# EUROPEAN PATENT SPECIFICATION

(11) **EP 4 164 284 B1**
(45) Date of publication and mention of the grant of the patent: **18.02.2026**
(21) Application number: 21854237.1
(22) Date of filing: 05.08.2021
(51) Int. Cl.: H04W 24/10, H04W 76/27, H04W 48/18, H04W 48/20, H04W 60/00

(54) **METHOD AND DEVICE FOR PROCESSING EARLY MEASUREMENT RESULT DURING PLMN RESELECTION IN NEXT GENERATION MOBILE COMMUNICATION SYSTEM**
VERFAHREN UND VORRICHTUNG ZUR VERARBEITUNG FRÜHER MESSERGEBNISSE WÄHREND EINER PLMN-NEUAUSWAHL IN EINEM MOBILKOMMUNIKATIONSSYSTEM DER NÄCHSTEN GENERATION
PROCÉDÉ ET DISPOSITIF DE TRAITEMENT DE RÉSULTAT DE MESURE PRÉCOCE PENDANT UNE RESÉLECTION PLMN DANS UN SYSTÈME DE COMMUNICATION MOBILE DE PROCHAINE GÉNÉRATION

(30) Priority: 05.08.2020 KR 20200097857
(43) Date of publication of application: 12.04.2023
(73) Proprietor: Samsung Electronics Co., Ltd., Gyeonggi-do 16677 (KR)
(72) Inventor: JUNG, Sangyeob, Suwon-si, Gyeonggi-do 16677 (KR); KIM, Soenghun, Suwon-si, Gyeonggi-do 16677 (KR)
(74) Representative: Gulde & Partner
(86) International application number: PCT/KR2021/010366
(87) International publication number: WO 2022/031091

(56) References cited:
- EP-A1- 2 677 798
- WO-A1-2019/027294
- KR-A- 20190 130 174
- KR-A- 20200 008 666
- KR-B1- 102 064 377
- US-A1- 2020 113 010
- 3GPP; TSG RAN; NR; RRC protocol specification (Release 16). 3GPP TS 38.331 V16.1.0 (July 2020). 24 July 2020.
- ASUSTEK: "Clarification on generation of BFR MAC CE", 3GPP DRAFT; R2-2005568, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20200601 - 20200612, 22 May 2020 (2020-05-22), Mobile Competence Centre ; 650, route des Lucioles ; F-06921 Sophia-Antipolis Cedex ; France , XP051888893

## Description

### [Technical Field]

The disclosure relates to a wireless communication system and, more specifically to, a method and an apparatus by which a terminal in an idle state (RRC_IDLE) or an inactive state (RRC_INACTIVE) performs early measurement and processes a result thereof during reselection of a public land mobile network (PLMN) in a wireless communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

Meanwhile, with the recent development of wireless communication technology, research on technology for performing early measurement reporting through a terminal in an idle state or inactive state, so as to quickly set up and activate a configuration for cell access during cell reselection is being actively conducted.

EP 2 677 798 A1 discloses wireless communication terminal in a wireless communication system for performing a control not to transmit signals.

### [Disclosure of Invention]

### [Technical Problem]

The disclosure is to provide a method and an apparatus for preventing the terminal from, when a terminal performs early measurement reporting, reporting a measurement result to a new PLMN, which has no relation to a PLMN measured by an RRC idle or inactive terminal according to a conventional system, in case that the terminal accesses the new PLMN.

### [Solution to Problem]

The present invention is set out in the appended set of claims.

According to an embodiment of the disclosure for solving the above problems, a method performed by a terminal in a wireless communication system includes identifying a failure of connection with a primary cell (PCell) serving the terminal; storing cell level measurement information for the PCell and beam level measurement information for the PCell; transmitting, to a base station, a first message including an indicator indicating that reporting of information related to the connection failure is available; receiving, from the base station, a second message requesting the information related to the connection failure; and in response to the second message, transmitting, to the base station, a third message including the stored cell level measurement information and the stored beam level measurement information, wherein at least one measurement value for at least one reference signal related to the PCell is arranged in descending order and stored in the beam level measurement information.

Further, according to another embodiment of the disclosure for solving the above problems, a method performed by a base station in a wireless communication system includes receiving, from a terminal, a first message including an indicator indicating that reporting of information related to a connection failure is available; transmitting, to the terminal, a second message requesting the information related to the connection failure; and in response to the second message, receiving, from the terminal, a third message including cell level measurement information for a primary cell (PCell) on which the connection failure is identified and beam level measurement information for the PCell, wherein at least one measurement value for at least one reference signal related to the PCell is arranged in descending order and included in the beam level measurement information.

In addition, according to yet another embodiment of the disclosure for solving the above problems, a terminal in a wireless communication system includes a transceiver and a controller configured to identify a failure of connection with a primary cell (PCell) serving the terminal, store cell level measurement information for the PCell and beam level measurement information for the PCell, control the transceiver to transmit, to a base station, a first message including an indicator indicating that reporting of information related to the connection failure is available, control the transceiver to receive, from the base station, a second message requesting the information related to the connection failure, and control the transceiver to in response to the second message, transmit, to the base station, a third message including the stored cell level measurement information and the stored beam level measurement information, wherein at least one measurement value for at least one reference signal related to the PCell is arranged in descending order and stored in the beam level measurement information.

In addition, according to yet another embodiment of the disclosure for solving the above problems, a base station in a wireless communication system includes a transceiver and a controller configured to control the transceiver to receive, from a terminal, a first message including an indicator indicating that reporting of information related to a connection failure is available, control the transceiver to transmit, to the terminal, a second message requesting the information related to the connection failure, and control the transceiver to in response to the second message, receive, from the terminal, a third message including cell level measurement information relating to a primary cell (PCell) for which the connection failure is identified and beam level measurement information relating to the PCell, wherein at least one measurement value for at least one reference signal related to the PCell is arranged in descending order and included in the beam level measurement information.

### [Advantageous Effects of Invention]

According to an embodiment of the disclosure, a terminal may perform registered PLMN (RPLMN) checking before transmitting early measurement results to a base station, so as to prevent measurement results from being reported to a PLMN which is not related to the measurement.

### [Brief Description of Drawings]

FIG. 1 illustrates the structure of an LTE system according to an embodiment of the disclosure;
FIG. 2 illustrates a radio protocol structure in an LTE system according to an embodiment of the disclosure;
FIG. 3 illustrates the structure of a next-generation mobile communication system according to an embodiment of the disclosure;
FIG. 4 illustrates a radio protocol structure of a next-generation mobile communication system according to an embodiment of the disclosure;
FIG. 5 is a flowchart illustrating an operation in which a UE in a radio resource control (RRC) idle mode (RRC_IDLE) stores and reports early measurement results according to a conventional system;
FIG. 6 is a flowchart illustrating an operation in a UE in an RRC idle mode (RRC_IDLE) stores and reports early measurement results in a next-generation mobile communication system according to an embodiment of the disclosure;
FIG. 7 is a flowchart illustrating an operation in which a UE in an RRC idle mode (RRC_IDLE) stores and reports early measurement results in a next-generation mobile communication system according to an embodiment of the disclosure;
FIG. 8 is a flowchart illustrating a UE operation in which a UE collects and reports cell measurement information according to an embodiment of the disclosure;
FIG. 9 is a flowchart illustrating a process in which a UE collects RRC connection establishment failure information or RRC connection resumption failure information and reports the collected information to an NR base station in an NR system according to an embodiment of the disclosure;
FIG. 10 is a flowchart illustrating a process in which a UE collects RRC connection establishment failure information or connection resumption failure information and reports the collected information to an NR base station in an NR system according to an embodiment of the disclosure;
FIG. 11 is a flowchart illustrating a process in which a UE stores and reports radio link failure information or handover failure information during RLF detection or HO failure in an NR system according to an embodiment of the disclosure;
FIG. 12 is a flowchart illustrating a UE operation when an RRCConnectionRelease message is received from an LTE base station in a state in which access stratum (AS) security is not activated according to an embodiment of the disclosure;
FIG. 13 is a block diagram illustrating an internal structure of a UE according to an embodiment of the disclosure; and
FIG. 14 is a block diagram illustrating the configuration of an NR base station according to an embodiment of the disclosure.

### [Mode for the Invention]

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure will be described using terms and names defined in the 3rd generation partnership project long term evolution (3GPP LTE) standards for the convenience of description. However, the disclosure is not limited by these terms and names, and may be applied in the same way to systems that conform other standards. In the disclosure, the term "eNB" may be interchangeably used with the term "gNB". That is, a base station described as "eNB" may indicate "gNB".

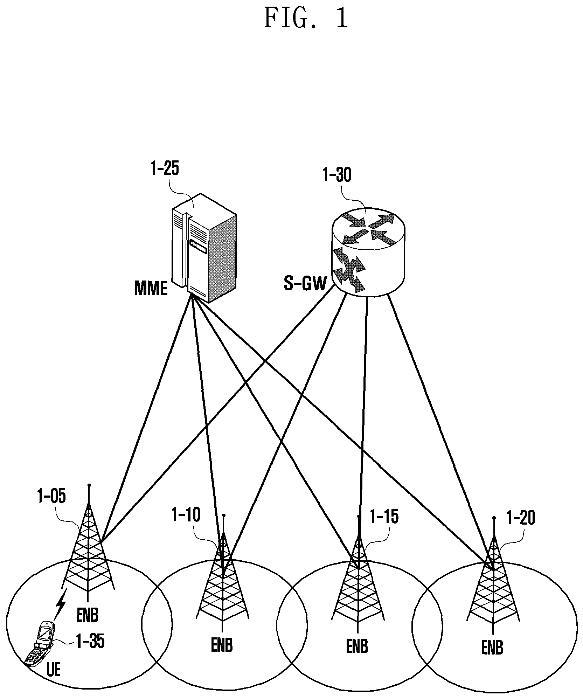

FIG. 1 illustrates the structure of an LTE system according to an embodiment of the disclosure.

Referring to FIG. 1, a radio access network of an LTE system may include next-generation base stations (evolved node Bs) (hereinafter ENBs, node Bs, or base stations) 1-05, 1-10, 1-15, and 1-20, a mobility management entity (MME) 1-25, or a serving gateway (S-GW) 1-30, as shown therein. A user equipment (hereinafter UE or terminal) 1-35 may access an external network through the ENBs 1-05 to 1-20 or S-GW 1-30.

In FIG. 1, the ENBs 1-05 to 1-20 may correspond to an existing node B of a UMTS system. The ENBs are connected to the UE 1-35 through a radio channel, and perform a more complicated role than the existing node B. In the LTE system, since all user traffic pertaining to real-time service, such as voice over IP (VoIP), via the Internet protocol, is serviced through a shared channel, a device that performs scheduling by collecting state information, such as buffer states, available transmit power states, and channel states of UEs, is required, and ENBs 1-05 to 1-20 may be in charge of the scheduling of the device. One ENB controls multiple cells, in general. For example, in order to implement a transmission rate of 100 Mbps, the LTE system uses orthogonal frequency division multiplexing (hereinafter, referred to as OFDM) as a radio access technology in the bandwidth of 20 MHz. In addition, the LTE system adopts an adaptive modulation & coding (hereinafter, referred to as AMC) scheme for determining a modulation scheme and a channel coding rate based on the channel state of the UE. The S-GW 1-30 is a device for providing a data bearer, and may generate or remove a data bearer under the control of the MME 1-25. The MME is in charge of various control functions in addition to a mobility management function for the UE, and is connected to multiple base stations.

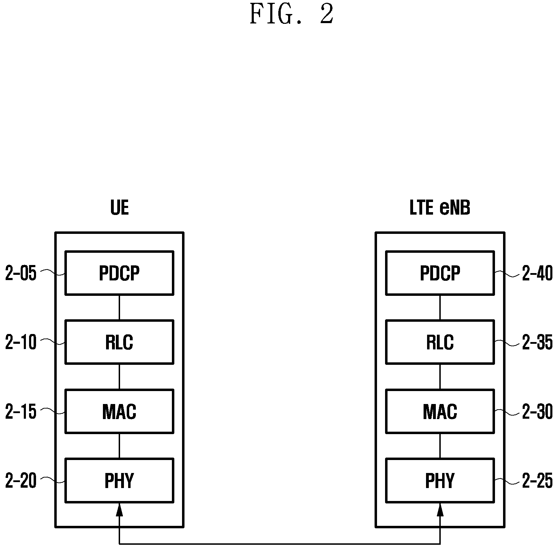

FIG. 2 illustrates a radio protocol structure in an LTE system according to an embodiment of the disclosure.

Referring to FIG. 2, the radio protocol of the LTE system includes packet data convergence protocols (PDCPs) 2-05 and 2-40, radio link controls (RLCs) 2-10 and 2-35, and medium access controls (MACs) 2-15 and 2-30, in a UE and an ENB, respectively. PDCPs 2-05 and 2-40 are used to perform operations, such as IP header compression/reconstruction. The main functions of PDCPs are summarized as follows.
- Header compression and decompression: ROHC only
- Transfer of user data
- In-sequence delivery of upper layer PDUs at PDCP re-establishment procedure for RLC AM
- Sequence reordering (for split bearers in DC (only support for RLC AM): PDCP PDU routing for transmission and PDCP PDU reordering for reception)
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM)
- Ciphering and deciphering
- Timer-based SDU discard in uplink

The radio link control (hereinafter referred to as RLC) 2-10 and 2-35 may perform an automatic repeat request (ARQ) operation and the like by reconfiguring a PDCP protocol data unit (PDU) to an appropriate size. The main functions of RLC are summarized below.
- Transfer of upper layer PDUs
- ARQ function (Error correction through ARQ (only for AM data transfer))
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC service data unit (SDU) discard (only for UM and AM data transfer)
- RLC re-establishment

The MACs 2-15 and 2-30 are connected to multiple RLC layer devices configured in one UE, and may perform an operation of multiplexing RLC PDUs to MAC PDUs and de-multiplexing RLC PDUs from MAC PDUs. The main functions of MAC are summarized as follows.
- Mapping between logical channels and transport channels
- Multiplexing/de-multiplexing of MAC SDUs belonging to one or different logical channels into/from transport blocks (TB) delivered to/from the physical layer on transport channels
- Scheduling information reporting
- Error correction through hybrid ARQ (HARQ)
- Priority handling between logical channels of one UE
- Priority handling between UEs by means of dynamic scheduling
- Multimedia broadcast multicast service (MBMS) identification
- Transport format selection
- Padding

Physical layers 2-20 and 2-25 may perform operations of channel coding and modulating upper layer data, forming the upper layer data into an OFDM symbol, transmitting the OFDM symbol through a radio channel, or of demodulating an OFDM symbol received through a radio channel, channel-decoding the OFDM symbol, and transmitting the OFDM symbol to an upper layer.

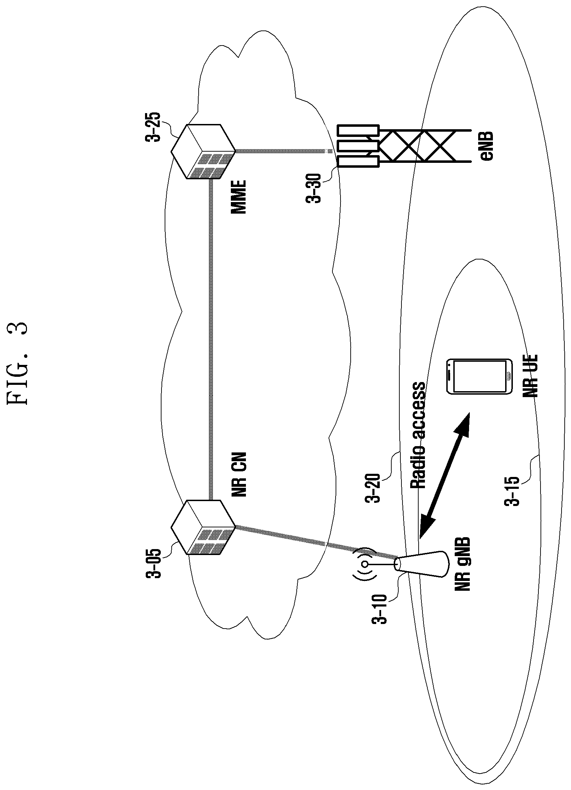

FIG. 3 illustrates the structure of a next-generation mobile communication system according to an embodiment of the disclosure.

Referring to FIG. 3, a radio access network of a next-generation mobile communication system (hereinafter referred to as NR or 2G) may include a next-generation base station (new radio node B) (hereinafter referred to as an NR gNB, or NR base station) 3-10 and a new radio core network (NR CN) 3-05, as shown therein. A user equipment (a new radio user equipment) (hereinafter referred to as NR UE or a terminal) 3-15 may access an external network via an NR gNB 3-10 and an NR CN 3-05.

In FIG. 3, the NR gNB 3-10 corresponds to an evolved node B (eNB) of the existing LTE system. The NR gNB is connected to an NR UE 3-15 via a radio channel, and may provide an excellent service as compared to the existing node B. In a next-generation mobile communication system, since all types of user traffic are serviced through a shared channel, there is a need for a device for performing scheduling by collecting state information, such as buffer states, available transmission power states, and channel states of UEs. Further, the NR NB 3-10 is in charge of the scheduling of the device. One NR gNB typically controls multiple cells, in general. In order to implement ultra-high speed data transmission as compared to the current LTE, the NR gNB may have the existing maximum bandwidth or more, and may additionally employ beamforming technology using orthogonal frequency division multiplexing (hereinafter referred to as OFDM) as a radio access technology. In addition, the NR gNB adopts an adaptive modulation & coding (AMC) scheme that determines a modulation scheme and a channel coding rate based on the channel state of a UE. The NR CN 3-05 performs functions, such as mobility support, bearer configuration, QoS configuration, and the like. The NR CN is a device that is in charge of various control functions in addition to a mobility management function for a UE, and may be connected to multiple base stations. In addition, the next-generation mobile communication system may also operate in conjunction with the existing LTE system, and the NR CN may be connected to an MME 3-25 via a network interface. The MME may be connected to an eNB 3-30, that is, to the existing base station.

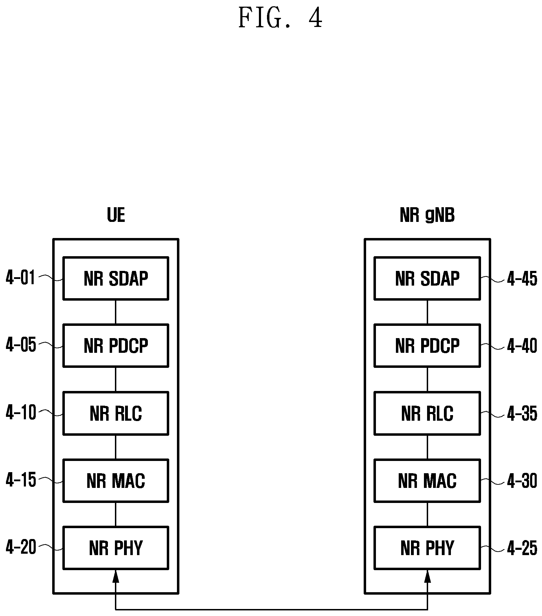

FIG. 4 illustrates a radio protocol structure of a next-generation mobile communication system according to an embodiment of the disclosure.

FIG. 4 illustrates a radio protocol structure of a next-generation mobile communication system to which the disclosure can be applied.

Referring to FIG. 4, the radio protocol of the next-generation mobile communication system includes NR service data adaptation protocol (SDAPs) 4-01 and 4-45, NR PDCPs 4-05 and 4-40, NR RLCs 4-10 and 4-35, and NR MACs 4-15 and 4-30, in a UE and an NR base station, respectively.

The main functions of the NR SDAPs 4-01 and 4-45 may include some of the following functions.
- Transfer of user plane data
- Mapping between a QoS flow and a data bearer (DRB) for both uplink (UL) and downlink (DL)
- Marking QoS flow ID in both DL and UL packets
- Mapping a reflective QoS flow to a DRB for uplink SDAP PDUs (reflective QoS flow to DRB mapping for the UL SDAP PDUs)

With regard to the SDAP layer device, the UE may be configured with, through a radio resource control (RRC) message, whether to use the header of the SDAP layer device or the function of the SDAP layer device for each PDCP layer device, for each bearer, or for each logical channel. Further, when the SDAP header is configured, the UE may indicate to update or reconfigure mapping information for uplink and downlink QoS flows and data bearers by using a non-access stratum (NAS) QoS reflective setting 1-bit indicator (NAS reflective QoS) and an AS QoS reflective setting 1-bit indicator (AS reflective QoS) of the SDAP header. The SDAP header may include QoS flow ID information indicating QoS. The QoS information may be used as data processing priority and scheduling information to support a smooth service.

The main functions of the NR PDCPs 4-05 and 4-40 may include some of the following functions.
- Header compression and decompression: ROHC only
- Transfer of user data
- In-sequence delivery of upper layer PDUs
- Out-of-sequence delivery of upper layer PDUs
- Sequence reordering (PDCP PDU reordering for reception)
- Duplicate detection of lower layer SDUs
- Retransmission of PDCP SDUs
- Ciphering and deciphering
- Timer-based SDU discard in uplink

In the above, the reordering function of the NR PDCP device may include a function of sequentially reordering PDCP PDUs, received from a lower layer, based on a PDCP sequence number (SN), and a function of transmitting data to an upper layer in the reordered sequence. Alternatively, the reordering function of the NR PDCP device may include a function of directly transmitting data to an upper layer without taking the sequence into consideration, a function of reordering the sequence and recording lost PDCP PDUs, a function of providing a state report on the lost PDCP PDUs to a transmission side, and a function of requesting retransmission of the lost PDCP PDUs.

The main functions of the NR RLCs 4-10 and 4-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above, the in-sequence delivery (or ID) function of the NR RLC device refers to a function of transmitting RLC SDUs, received from a lower layer, to an upper layer in sequence. The in-sequence delivery function of the NR RLC device may include, when one RLC SDU is originally segmented into multiple RLC SDUs and received, a function of reassembling and transmitting the multiple RLC SDUs, a function of reordering the received RLC PDUs based on an RLC sequence number (SN) or PDCP sequence number (SN), a function of reordering the sequence and recording lost RLC PDUs, a function of providing a state report on the lost RLC PDUs to a transmission side, a function of requesting retransmission of the lost RLC PDUs, a function of sequentially transmitting only RLC SDUs prior to the lost RLC SDU to an upper layer when there is a lost RLC SDU, a function of sequentially transmitting all the RLC SDUs received before a predetermined timer starts to an upper layer when the predetermined timer has expired even if there is a lost RLC SDU, or a function of sequentially transmitting all RLC SDUs received so far to an upper layer when the predetermined timer has expired even when there is a lost RLC SDU. Further, in the above, the RLC PDUs may be processed in a sequence in which the RLC PDUs are received (a sequence number, regardless of the sequence of sequence numbers, or in a sequence of arrival), and may be transmitted to a PDCP device in out-of-sequence delivery. The function may include receiving segments stored in a buffer or segments to be received later, reconfiguring the segments in one complete RLC PDU, processing the RLC PDU, and transmitting the RLC PDU to the PDCP device. The NR RLC layer may not include a concatenation function, and the concatenation function may be performed by the NR MAC layer, or may be replaced by a multiplexing function of the NR MAC layer.

The out-of-sequence delivery function of the NR RLC device may include a function of directly transmitting the RLC SDUs, received from the lower layer, to an upper layer regardless of the sequence thereof. The out-of-sequence delivery function of the RLC device may include, when one RLC SDU has been originally segmented into multiple RLC SDUs and received, a function of reassembling the multiple RLC SDUs and transmitting the same, and a function of storing the RLC SN or PDCP SN of the received RLC PDUs, ordering the sequence, and recording the lost RLC PDUs.

The NR MACs 4-15 and 4-30 may be connected to multiple NR RLC layer devices configured in one UE, and the main function of the NR MAC may include some of the following functions.
- Mapping between logical channels and transport channels
- Multiplexing/de-multiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 4-20 and 4-25 may perform operations of channel-coding and modulating upper layer data, forming the upper layer data into an OFDM symbol, transmitting the OFDM symbols via a radio channel or demodulating and channel decoding of the OFDM symbols received via the radio channel, and transferring the OFDM symbol to an upper layer.

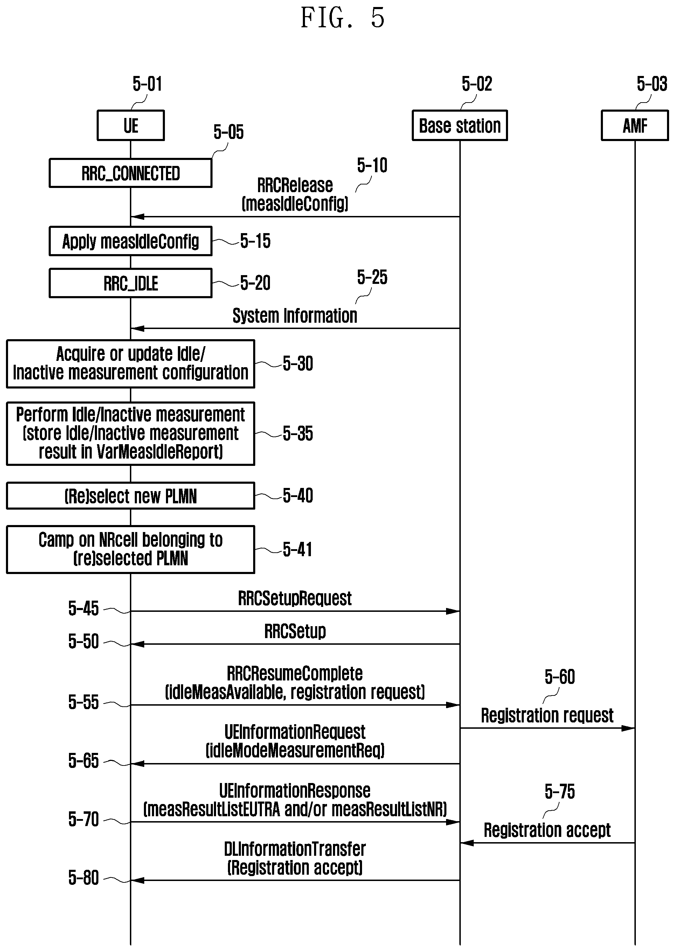

FIG. 5 is a flowchart illustrating an operation in which a UE in a radio resource control (RRC) idle mode (RRC_IDLE) stores and reports early measurement results according to a conventional system.

Referring to FIG. 5, a UE 5-01 may be in an RRC connected mode (RRC _CONNCTED) by establishing an RRC connection with an NR base station 5-02 (operation 5-05).

In operation 5-10, the RRC connected mode UE 5-01 may receive an RRCRelease message from the NR base station 5-02. The RRCRelease message may contain measIdleConfig including early measurement configuration (idle/inactive measurement configuration). measConfig may include at least a part of the following information.
- measIdleCarrierListNR: an NR carrier list to perform early measurement (idle/inactive measurement) in an RRC idle mode or RRC inactive mode (RRC_INACTIVE). Each NR carrier may include a part of information in Table 1 below. 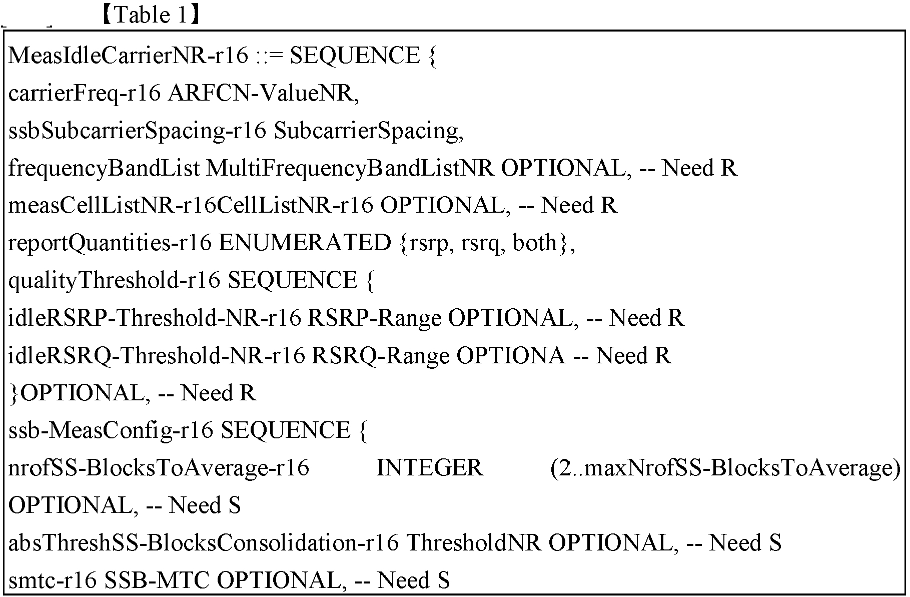 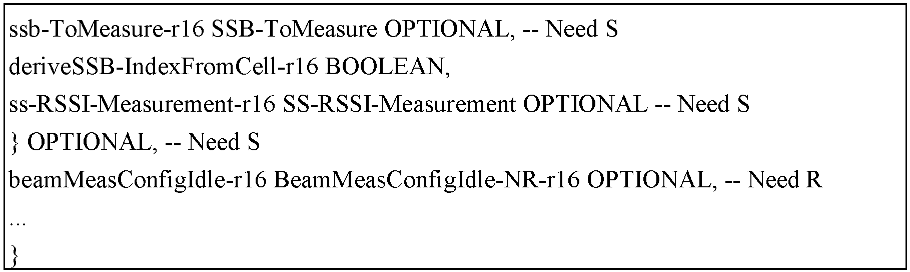
- measIdleCarrierListEUTRA: an E-UTRA carrier list to perform measurement in an RRC idle mode. Each E-UTRA carrier may include a part of the information in Table 2 below.

**[Table 2]**

| |
|---|
| ```
 MeasIdleCarrierEUTRA-r16 ::= SEQUENCE {
 carrierFreqEUTRA-r16 ARFCN-ValueEUTRA,
 allowedMeasBandwidth-r16 EUTRA-AllowedMeasBandwidth,
 measCellListEUTRA-r16CellListEUTRA-r16 OPTIONAL, -- Need R
 reportQuantitiesEUTRA-r16ENUMERATED {rsrp, rsrq, both},
 qualityThresholdEUTRA-r16SEQUENCE {
 idleRSRP-Threshold-EUTRA-r16 RSRP-RangeEUTRA OPTIONAL, -- Need R
 idleRSRQ-Threshold-EUTRA-r16 RSRQ-RangeEUTRA-r16 OPTIONAL -- Need R
 } OPTIONAL, -- Need S
 ...
 }
``` |

- measIdleDuration: a duration value with regard to performing early measurement in an RRC idle mode or RRC inactive mode (T331 timer value)
- validityAreaList: a frequency list and/or a cell list configured according to each frequency, for which a UE is requested to perform early measurement in an RRC idle mode or RRC inactive mode

In operation 5-15, a UE in RRC connected mode may apply measIdleConfig contained in the RRCRelease message. For example, if measIdleConfig is set to setup,
- The received measIdleDuration may be stored in VarMeasIdleConfig. In addition, T331 timer may be started with the value of measIdleDuration.
- In case that measIdleCarrierListNR is included in measIdleConfig, the received measIdleCarrierListNR may be stored in the VarMeasIdleConfig.
- In case that measIdleCarrierListEUTRA is included in measIdleConfig, the received measIdleCarrierListEUTRA may be stored in VarMeasIdleConfig.
- If the validityAreaList is included in measIdleConfig, the received validityAreaList may be stored in VarMeasIdleConfig.

In operation 5-20, the UE in RRC connected mode may transition to the RRC idle mode. The UE in RRC idle mode manages a registered public land mobile network (RPLMN) and/or a selected PLMN and/or equivalent PLMN (EPLMN) list.

In operation 5-25, the UE in RRC idle mode may acquire system information and camp on a suitable NR cell. A suitable NR cell may refer to a suitable NR cell belonging to the RPLMN and/or selected PLMN and/or EPLMN list having been specified in operation 5-20.

In operation 5-30, the UE in RRC idle mode may acquire or update the idle/inactive measurement configuration based on measIdleConfig having been included in the RRCRelease message in operation 5-10 and the system information having been acquired in operation 5-25.

In operation 5-35, the UE in RRC idle mode may perform idle/inactive measurement. Specifically, the UE in RRC idle mode may perform idle/inactive measurement while the T331 timer is running, and the detailed UE operation is as follows.
1> perform the measurements in accordance with the following:
   ** 2> if the *VarMeasIdleConfig* includes the *measldleCarrierListEUTRA* and the SIB1 contains *idleModeMeasurementsEUTRA:*
      **** 3> for each entry in *measIdleCarrierListEUTRA* within *VarMeasIdleConfig:*
         ****** 4> if UE supports NE-DC between the serving carrier and the carrier frequency indicated by *carrierFreqEUTRA* within the corresponding entry:
            * * * * * * * * 5> perform measurements in the carrier frequency and bandwidth indicated by *carrierFreq* and *allowedMeasBandwidth* within the corresponding entry;
            * * * * * * * * 5> if the *reportQuantitiesEUTRA* is set to *rsrq:*
               * * * * * * * * * * 6> consider RSRQ as the sorting quantity;
            ******** 5> else:
               ********** 6> consider RSRP as the sorting quantity;
            ******** 5> if the *measCellListEUTRA* is included:
               ********** 6> consider cells identified by each entry within the *measCellListEUTRA* to be applicable for idle/inactive mode measurement reporting;
            ******** 5> else:
               ********** 6> consider up to *maxCellMeasIdle* strongest identified cells, according to the sorting quantity, to be applicable for idle/inactive measurement reporting;
            ******** 5> for all cells applicable for idle/inactive measurement reporting, derive measurement results for the measurement quantities indicated by *reportQuantitiesEUTRA;*
            ******** 5> store the derived measurement results as indicated by *reportQuantitiesEUTRA* within the *measReportIdleEUTRA* in *VarMeasIdleReport* in decreasing order of the sorting quantity, i.e., the best cell is included first, as follows:
               ********** 6> if *qualityThresholdEUTRA* is configured:
                  ************ 7> include the measurement results from the cells applicable for idle/inactive measurement reporting whose RSRP/RSRQ measurement results are above the value(s) provided in *qualityThresholdEUTRA;*
               ********** 6> else:
                  ************ 7> include the measurement results from all cells applicable for idle/inactive measurement reporting;
   ** 2> if the *VarMeasIdleConfig* includes the *measIdleCarrierListNR* and the SIB1 contains *idleModeMeasurementsNR:*
      **** 3> for each entry in *measIdleCarrierListNR* within *VarMeasIdleConfig* that contains *ssb-MeasConfig:*
         ****** 4> if UE supports carrier aggregation or NR-DC between serving carrier and the carrier frequency and subcarrier spacing indicated by *carrierFreq* and *ssbSubCarrierSpacing* within the corresponding entry:
            ******** 5> perform measurements in the carrier frequency and subcarrier spacing indicated by *carrierFreq* and *ssbSubCarrierSpacing* within the corresponding entry;
            ******** 5> if the *reportQuantities* is set to rsrq:
               ********** 6> consider RSRQ as the cell sorting quantity;
            ******** 5> else:
               ********** 6> consider RSRP as the cell sorting quantity;
            * * * * * * * * 5> if the *measCellListNR* is included:
               * * * * * * * * * * 6> consider cells identified by each entry within the *measCellListNR* to be applicable for idle/inactive measurement reporting;
            ******** 5> else:
               ********** 6> consider up to *maxCellMeasIdle* strongest identified cells, according to the sorting quantity, to be applicable for idle/inactive measurement reporting;
            ******** 5> for all cells applicable for idle/inactive measurement reporting and for the serving cell, derive cell measurement results for the measurement quantities indicated by *reportQuantities;*
            * * * * * * * * 5> store the derived cell measurement results as indicated by *reportQuantities* for the serving cell within *measResultServingCell* in the *measReportIdleNR* in *VarMeasIdleReport;*
            ******** 5> store the derived cell measurement results as indicated by *reportQuantities* for cells applicable for idle/inactive measurement reporting within the *measReportIdleNR* in *VarMeasIdleReport* in decreasing order of the cell sorting quantity, i.e., the best cell is included first, as follows:
               ********** 6> if quality Threshold is configured:
                  * * * * * * * * * * * * 7> include the measurement results from the cells applicable for idle/inactive measurement reporting whose RSRP/RSRQ measurement results are above the value(s) provided in *quality Threshold;*
               * * * * * * * * * 6> else:
                  ************ 7> include the measurement results from all cells applicable for idle/inactive measurement reporting;
            ******** 5> if *beamMeasConfigIdle* is included in the associated entry in *measIdleCarrierListNR,* for each cell in the measurement results:
               ********** 6> derive beam measurements based on SS/PBCH block for each measurement quantity indicated in *reportQuantityRS-IndexesNR,* as described in TS 38.215;
               * * * * * * * * * * 6> if the *reportQuantityRS-Indexes* is set to rsrq:
                  * * * * * * * * * * * * 7> consider RSRQ as the beam sorting quantity;
               ********** 6> else:
                  ************ 7> consider RSRP as the beam sorting quantity;
               * * * * * * * * * * 6> set *resultsSSB-Indexes* to include up to *maxNrofRS-IndexesToReport* SS/PBCH block indexes in order of decreasing beam sorting quantity as follows:
                  ************ 7> include the index associated to the best beam for the sorting quantity and if *absThreshSS-BlocksConsolidation* is included, the remaining beams whose sorting quantity is above *absThreshSS-BlocksConsolidation;*
               * * * * * * * * * * 6> if the *includeBeamMeasurements* is set to true:
                  * * * * * * * * * * * * 7> include the beam measurement results as indicated by *reportQuantityRS-Indexes;*

Through operation 5-35, the UE in RRC idle mode may store early measurement results (idle/inactive measurement results) in VarMeasIdleReport, and a measurement result for NR (measReportIdleNR) and/or a measurement result for EUTRA (measReportIdleEUTRA) may be stored in the VarMeasIdleReport.

In operation 5-40, the UE in RRC idle mode may reselect the PLMN. The reselected PLMN may refer to a PLMN, which does not belong to the RPLMN and/or selected PLMN and/or EPLMN List having been specified in operation 5-20.

In operation 5-41, the UE in RRC idle mode may camp on a suitable NR cell belonging to the reselected PLMN.

In operation 5-45, the UE may transmit an RRC connection setup request message (RRCSetupRequest) to the NR base station to initiate an initial registration procedure since the UE in RRC idle mode has reselected the PLMN. In operation 5-50, the NR base station may transmit an RRC connection setup message (RRCSetup) to the UE. Upon receiving the RRC connection setup message, the UE may apply the RRC connection setup message and transition to the RRC connected mode.

In operation 5-55, the UE in RRC connected mode may transmit an RRC connection setup completion message (RRCSetupComplete) to the NR base station. The RRC connection setup completion message may include the following information.
- idleMeasAvailable: an indicator indicating that there are early measurement results measured in an RRC idle mode or RRC inactive mode
- dedicatedNAS-Message: registration request (registration type: initial registration)

In operation 5-60, the NR base station may deliver the dedicatedNAS-Message (i.e., registration request message), which is stored in the received RRC connection setup completion message, to an AMF. The NR base station may be configured not to perform decoding of the dedicatedNAS-Message, and thus not to identify information included in the dedicatedNAS-Message.

In operation 5-65, the NR base station may transmit a UEInformationRequest message to the UE in RRC connected mode. The UEInformationRequest message may include an indicator (idleModeMeasurementReq) indicating to report early measurement results measured in the RRC idle mode or RRC inactive mode.

In operation 5-70, the UE in RRC connected mode, having received the UEInformationRequest message, may transmit a UEInformationResponse message to the NR base station in response thereto. The early measurement results measured in the RRC idle mode or RRC inactive mode may be included in the UEInformationResponse message. The early measurement results may refer to measResultListEUTRA and/or measResultListNR.

In operation 5-75, the AMF may transmit a registration accept message to the NR base station in response to operation 5-60.

In operation 5-80, the NR base station may include the received registration accept message in the RRC message and transmit the same to the UE in RRC connected mode. As an example, the RRC message may refer to DLInformationTransfer.

Operations 5-65 and 5-70 may occur after operation 5-75 or after operation 5-80.

An operation, in which a UE in RRC idle mode (RRC_IDLE) according to a conventional system stores and reports early measurement results, may cause the following problem.

Problem: the UE may report the early measurement results, which are measured for another RPLMN or a PLMN included in a PLMN list and stored, to a new PLMN or a PLMN different from another PLMN or the PLMN included in the PLMN list. That is, early measurement results, which are measured for communication service provider 1 and stored, may be reported to communication service provider 2.

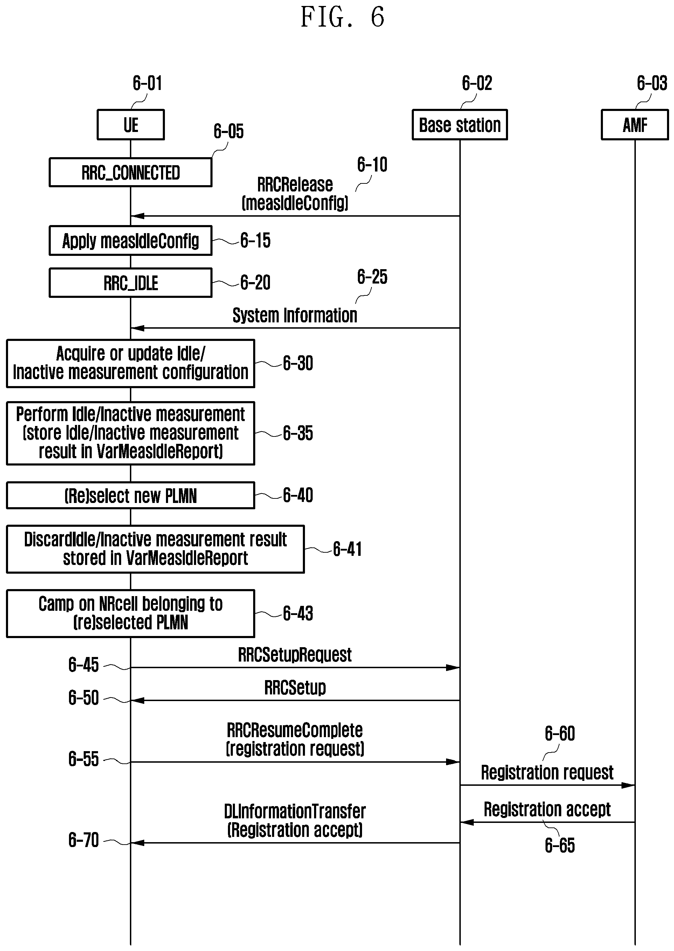

FIG. 6 is a flowchart illustrating an operation in a UE in an RRC idle mode (RRC_IDLE) stores and reports early measurement results in a next-generation mobile communication system according to an embodiment of the disclosure.

Referring to FIG. 6, a UE 6-01 may be in an RRC connected mode (RRC _CONNCTED) by establishing an RRC connection with an NR base station 6-02 (operation 6-05).

In operation 6-10, the RRC connected mode UE 6-01 may receive an RRCRelease message from the NR base station 6-02. The RRCRelease message may include measIdleConfig containing early measurement configuration (idle/inactive measurement configuration). measConfig may include at least a part of the following information.
- measIdleCarrierListNR: NR carrier list to perform early measurement (idle/inactive measurement) in RRC idle mode or RRC inactive mode (RRC_INACTIVE). Each NR carrier may include a part of the information in Table 3 below. 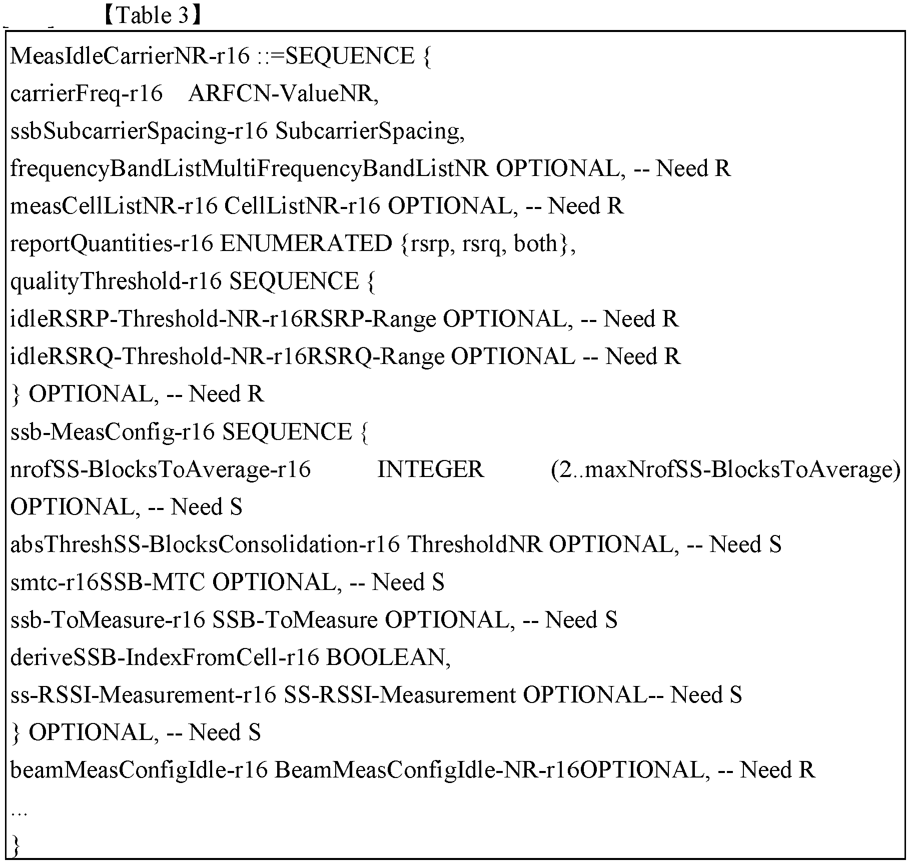
- measIdleCarrierListEUTRA: an E-UTRA carrier list to perform measurement in RRC idle mode. Each E-UTRA carrier may include a part of the information in Table 4 below.

**[Table 4]**

| |
|---|
| ```
 MeasIdleCarrierEUTRA-r16 ::= SEQUENCE {
 carrierFreqEUTRA-r16 ARFCN-ValueEUTRA,
 allowedMeasBandwidth-r16 EUTRA-AllowedMeasBandwidth,
 measCellListEUTRA-r16CellListEUTRA-r16OPTIONAL, -- Need R
 reportQuantitiesEUTRA-r1ENUMERATED {rsrp, rsrq, both},
 qualityThresholdEUTRA-r16SEQUENCE {
 idleRSRP-Threshold-EUTRA-r16 RSRP-RangeEUTRA OPTIONAL, -- Need R
 idleRSRQ-Threshold-EUTRA-r16 RSRQ-RangeEUTRA-r16 OPTIONAL -- Need R
 } OPTIONAL, -- Need S
 ...
 }
``` |

- measIdleDuration: a duration value with regard to performing early measurement in an RRC idle mode or RRC inactive mode (T331 timer value)
- validityAreaList: a frequency list and/or a cell list configured according to each frequency, for which a UE is requested to perform early measurement in an RRC idle mode or RRC inactive mode

In operation 6-15, the UE in RRC connected mode may apply measIdleConfig contained in the RRCRelease message. For example, if measIdleConfig is set to setup,
- The received measIdleDuration may be stored in VarMeasIdleConfig. Further, the T331 timer may be started with the value of measIdleDuration.
- In case that measIdleCarrierListNR is included in measIdleConfig, the received measIdleCarrierListNR may be stored in VarMeasIdleConfig.
- In case that measIdleCarrierListEUTRA is included in measIdleConfig, the received measIdleCarrierListEUTRA may be stored in VarMeasIdleConfig.
- If the validityAreaList is included in measIdleConfig, the received validityAreaList may be stored in VarMeasIdleConfig.

In operation 6-20, the UE in RRC connected mode may transition to the RRC idle mode. The UE in RRC idle mode manages a registered PLMN (RPLMN) and/or selected PLMN and/or equivalent PLMN (EPLMN) list.

In operation 6-25, the UE in RRC idle mode may acquire system information and camp on a suitable NR cell. The suitable NR cell may refer to a suitable NR cell belonging to the RPLMN and/or selected PLMN and/or EPLMN list specified in operation 6-20.

In operation 6-30, the UE in RRC idle mode may acquire or update the idle/inactive measurement configuration based on measIdleConfig included in the RRCRelease message in operation 6-10 and the system information acquired in operation 6-25.

In operation 6-35, the UE in RRC idle mode may perform idle/inactive measurement. Specifically, the UE in RRC idle mode may perform idle/inactive measurement while the T331 timer is running, and the detailed UE operation is as follows.
1> perform the measurements in accordance with the following:
   ** 2> if the *VarMeasIdleConfig* includes the *measldleCarrierListEUTRA* and the SIB1 contains *idleModeMeasurementsEUTRA:*
      **** 3> for each entry in *measIdleCarrierListEUTRA* within *VarMeasIdleConfig:*
         ****** 4> if UE supports NE-DC between the serving carrier and the carrier frequency indicated by *carrierFreqEUTRA* within the corresponding entry:
            * * * * * * * * 5> perform measurements in the carrier frequency and bandwidth indicated by *carrierFreq* and *allowedMeasBandwidth* within the corresponding entry;
            * * * * * * * * 5> if the *reportQuantitiesEUTRA* is set to rsrq:
               * * * * * * * * * * 6> consider RSRQ as the sorting quantity;
            ******** 5> else:
               ********** 6> consider RSRP as the sorting quantity;
            ******** 5> if the *measCellListEUTRA* is included:
               ********** 6> consider cells identified by each entry within the *measCellListEUTRA* to be applicable for idle/inactive mode measurement reporting;
            ******** 5> else:
               ********** 6> consider up to *maxCellMeasIdle* strongest identified cells, according to the sorting quantity, to be applicable for idle/inactive measurement reporting;
            ******** 5> for all cells applicable for idle/inactive measurement reporting, derive measurement results for the measurement quantities indicated by *reportQuantitiesEUTRA ;*
            ******** 5> store the derived measurement results as indicated by *reportQuantitiesEUTRA* within the *measReportIdleEUTRA* in *VarMeasIdleReport* in decreasing order of the sorting quantity, i.e., the best cell is included first, as follows:
               ********** 6> if *qualityThresholdEUTRA* is configured:
                  ************ 7> include the measurement results from the cells applicable for idle/inactive measurement reporting whose RSRP/RSRQ measurement results are above the value(s) provided in *qualityThresholdEUTRA;*
               ********** 6> else:
                  ************ 7> include the measurement results from all cells applicable for idle/inactive measurement reporting;
   ** 2> if the *VarMeasIdleConfig* includes the *measIdleCarrierListNR* and the SIB1 contains *idleModeMeasurementsNR:*
      **** 3> for each entry in *measIdleCarrierListNR* within *VarMeasIdleConfig* that contains *ssb-MeasConfig:*
         ****** 4> if UE supports carrier aggregation or NR-DC between serving carrier and the carrier frequency and subcarrier spacing indicated by *carrierFreq* and *ssbSubCarrierSpacing* within the corresponding entry:
            ******** 5> perform measurements in the carrier frequency and subcarrier spacing indicated by *carrierFreq* and *ssbSubCarrierSpacing* within the corresponding entry;
            ******** 5> if the *reportQuantities* is set to rsrq:
               ********** 6> consider RSRQ as the cell sorting quantity;
            ******** 5> else:
               ********** 6> consider RSRP as the cell sorting quantity;
            ******** 5> if the *measCellListNR* is included:
               ********** 6> consider cells identified by each entry within the *measCellListNR* to be applicable for idle/inactive measurement reporting;
            ******** 5> else:
               * * * * * * * * * * 6> consider up to *maxCellMeasIdle* strongest identified cells, according to the sorting quantity, to be applicable for idle/inactive measurement reporting;
            ******** 5> for all cells applicable for idle/inactive measurement reporting and for the serving cell, derive cell measurement results for the measurement quantities indicated by *reportQuantities;*
            ******** 5> store the derived cell measurement results as indicated by *reportQuantities* for the serving cell within *measResultServingCell* in the *measReportIdleNR* in *VarMeasIdleReport;*
            ******** 5> store the derived cell measurement results as indicated by *reportQuantities* for cells applicable for idle/inactive measurement reporting within the *measReportIdleNR* in *VarMeasIdleReport* in decreasing order of the cell sorting quantity, i.e., the best cell is included first, as follows:
               * * * * * * * * * * 6> if *qualityThreshold* is configured:
                  * * * * * * * * * * * * 7> include the measurement results from the cells applicable for idle/inactive measurement reporting whose RSRP/RSRQ measurement results are above the value(s) provided in *qualityThreshold,*
               ********** 6> else:
                  ************ 7> include the measurement results from all cells applicable for idle/inactive measurement reporting;
            ******** 5> if *beamMeasConfigIdle* is included in the associated entry in *measIdleCarrierListNR,* for each cell in the measurement results:
               ********** 6> derive beam measurements based on SS/PBCH block for each measurement quantity indicated in *reportQuantityRS-IndexesNR,* as described in TS 38.215;
               ********** 6> if the *reportQuantityRS-Indexes* is set to rsrq:
                  ************ 7> consider RSRQ as the beam sorting quantity;
               ********** 6> else:
                  ************ 7> consider RSRP as the beam sorting quantity;
               * * * * * * * * * * 6> set *resultsSSB-Indexes* to include up to *maxNrofRS-IndexesToReport* SS/PBCH block indexes in order of decreasing beam sorting quantity as follows:
                  ************ 7> include the index associated to the best beam for the sorting quantity and if *absThreshSS-BlocksConsolidation* is included, the remaining beams whose sorting quantity is above *absThreshSS-BlocksConsolidation;*
               ********** 6> if the *includeBeamMeasurements* is set to true:
                  ************ 7> include the beam measurement results as indicated by *reportQuantityRS-Indexes;*

Through operation 6-35, the UE in RRC idle mode may store early measurement results (idle/inactive measurement results) in VarMeasIdleReport, and a measurement result for NR (measReportIdleNR) and/or a measurement result for EUTRA (measReportIdleEUTRA) may be stored in the VarMeasIdleReport.

In operation 6-40, the UE in RRC idle mode may reselect the PLMN. The reselected PLMN may refer to a PLMN, which does not belong to the RPLMN and/or selected PLMN and/or EPLMN List having been specified in operation 6-20. In operation 6-41, the UE in RRC idle mode according to an embodiment of the disclosure proposes to discard early measurement results (idle/inactive measurement results) having been stored in VarMeasIdleReport in operation 6-35.

In operation 6-43, the UE in RRC idle mode may camp on a suitable NR cell belonging to the reselected PLMN. In operation 6-43, the UE in RRC idle mode according to an embodiment of the disclosure proposes to discard early measurement results (idle/inactive measurement results) having been stored in VarMeasIdleReport in operation 6-35.

In operation 6-45, the UE may transmit an RRC connection setup request message (RRCSetupRequest) to the NR base station to initiate an initial registration procedure since the UE in RRC idle mode has reselected the PLMN. In operation 6-50, the NR base station may transmit an RRC connection setup message (RRCSetup) to the UE. Upon receiving the RRC connection setup message, the UE may apply the RRC connection setup message and transition to the RRC connected mode.

In operation 6-55, the UE in RRC connected mode may transmit an RRC connection setup completion message (RRCSetupComplete) to the NR base station. The RRC connection setup completion message may include the following information.
- dedicatedNAS-Message: registration request (registration type: initial registration)

In operation 6-60, the NR base station may deliver the dedicatedNAS-Message (i.e., registration request message) stored in the received RRC connection setup completion message to the AMF. The NR base station may be configured not to perform decoding of the dedicatedNAS-Message, and thus not to identify information included in the dedicatedNAS-Message.

In operation 6-75, the AMF may transmit a registration accept message to the NR base station in response to operation 6-60.

In operation 6-80, the NR base station may include the received registration accept message in the RRC message and transmit the information to the UE in RRC connected mode. As an example, the RRC message may refer to DLInformationTransfer.

A UE according to an embodiment of the disclosure may be configured not to report the early measurement results, which are measured for another RPLMN or PLMN included in a PLMN list and stored, to a new PLMN or a PLMN different from another PLMN or the PLMN included in the PLMN list. Specifically, the UE according to an embodiment of the disclosure may have the following characteristics.
- inter-RAT cell re-selection only: Only the idle/inactive measurement configuration stored in VarMeasIdleConfig may be discarded.
- Inter-RAT cell re-selection + PLMN reselection towards EPLMN: Only the idle/inactive measurement configuration stored in VarMeasIdleConfig may be discarded.
- inter-RAT cell re-selection + PLMN reselection towards non-EPLMN or non-RPLMN or non-selected PLMN: both the idle/inactive measurement configuration stored in VarMeasIdleConfig and idle/inactive measurement results stored in VarMeasIdleReport may be discarded.
- intra-RAT cell re-selection only: Only the idle/inactive measurement configuration stored in VarMeasIdleConfig may be discarded.
- Intra-RAT cell re-selection + PLMN reselection towards EPLMN: Only the idle/inactive measurement configuration stored in VarMeasIdleConfig may be discarded.
- intra-RAT cell re-selection + PLMN reselection towards non-EPLMN or non-RPLMN or non-Selected PLMN: both the idle/inactive measurement configuration stored in VarMeasIdleConfig and the idle/inactive measurement results stored in VarMeasIdleReport may be discarded.

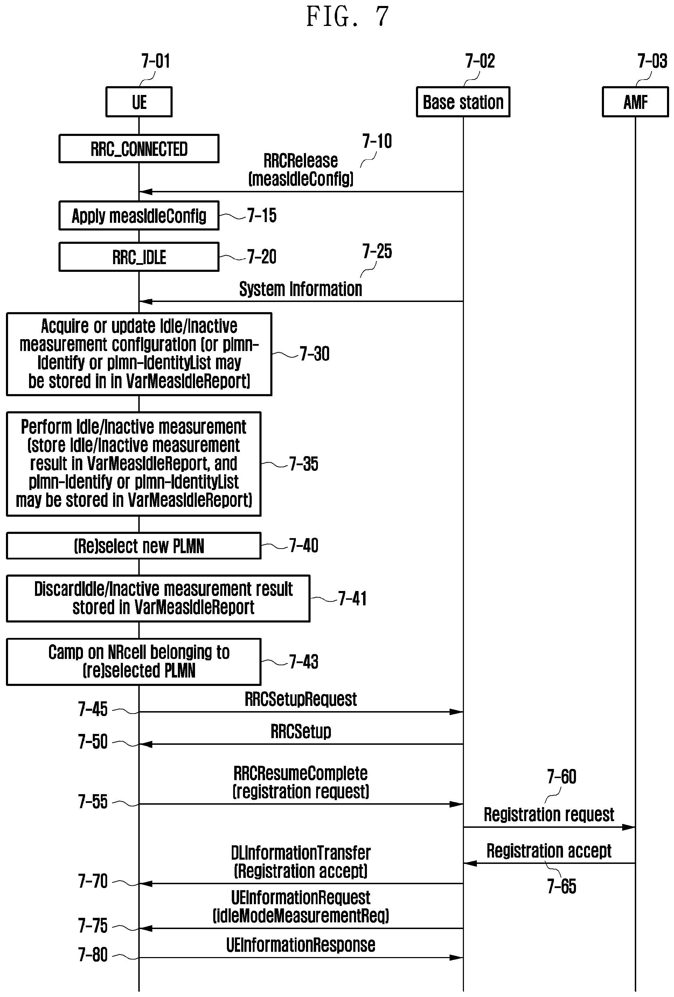

FIG. 7 is a flowchart illustrating an operation in which a UE in an RRC idle mode (RRC_IDLE) stores and reports early measurement results in a next-generation mobile communication system according to an embodiment of the disclosure.

Referring to FIG. 7, a UE 7-01 may be in an RRC connected mode (RRC _CONNCTED) by establishing an RRC connection with an NR base station 7-02 (operation 7-05).

In operation 7-10, the RRC connected mode UE 7-01 may receive an RRCRelease message from the NR base station 7-02. The RRCRelease message may include measIdleConfig containing early measurement configuration (idle/inactive measurement configuration). The measConfig may include at least a part of the following information.
- measIdleCarrierListNR: NR carrier list to perform early measurement (idle/inactive measurement) in an RRC idle mode or RRC inactive mode (RRC _INACTIVE). Each NR carrier may include a part of the information in Table 5 below. 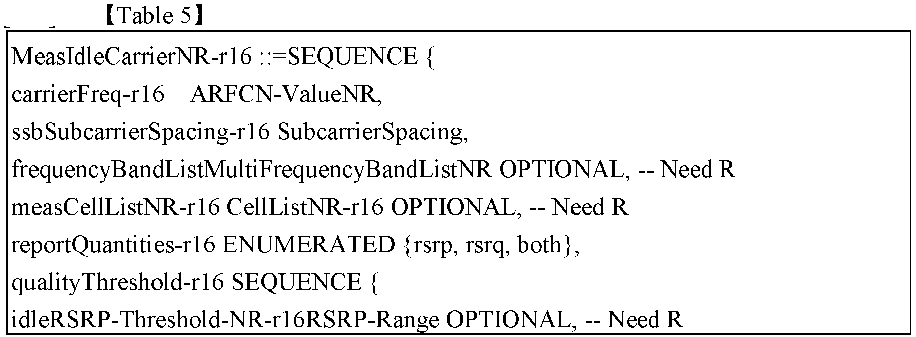 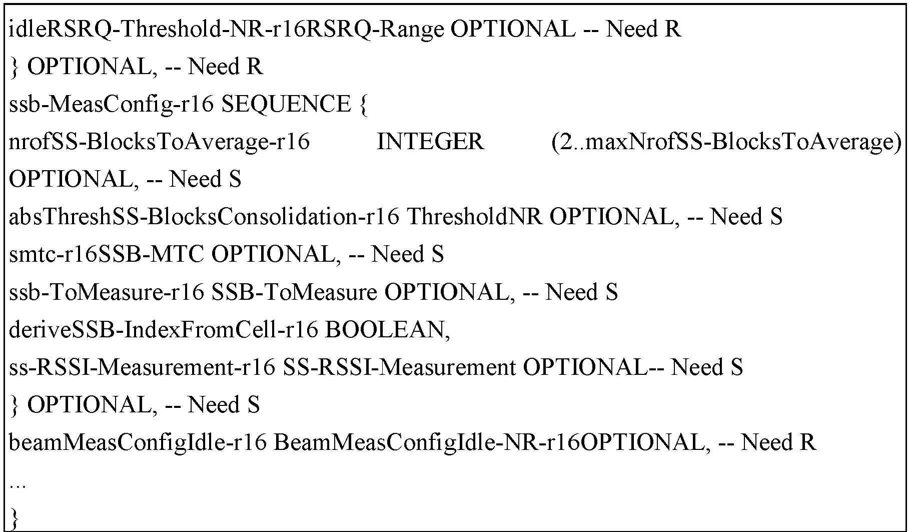
- measIdleCarrierListEUTRA: an E-UTRA carrier list to perform measurement in an RRC idle mode. Each E-UTRA carrier may include a part of the information in Table 6 below.

**[Table 6]**

| |
|---|
| ```
 MeasIdleCarrierEUTRA-r16 ::= SEQUENCE {
 carrierFreqEUTRA-r16 ARFCN-ValueEUTRA,
 allowedMeasBandwidth-r16 EUTRA-AllowedMeasBandwidth,
 measCellListEUTRA-r16CellListEUTRA-r160PTIONAL, -- Need R
 reportQuantitiesEUTRA-r1ENUMERATED {rsrp, rsrq, both},
 qualityThresholdEUTRA-r16SEQLTENCE {
 idleRSRP-Threshold-EUTRA-r16 RSRP-RangeEUTRA OPTIONAL, -- Need R
 idleRSRQ-Threshold-EUTRA-r16 RSRQ-RangeEUTRA-r16 OPTIONAL -- Need R
 } OPTIONAL, -- Need S
 ...
 }
``` |

- measIdleDuration: a duration value with regard to performing early measurement in an RRC idle mode or RRC inactive mode (T331 timer value)
- validityAreaList: a frequency list and/or a cell list configured according to each frequency, for which the UE is requested to perform early measurement in RRC idle mode or RRC inactive mode

In operation 7-15, the UE in RRC connected mode may apply measIdleConfig contained in the RRCRelease message. For example, if measIdleConfig is set to setup,
- The received measIdleDuration may be stored in VarMeasIdleConfig. Further, the T331 timer may be started with the measIdleDuration value.
- In case that measIdleCarrierListNR is included in measIdleConfig, the received measIdleCarrierListNR may be stored in VarMeasIdleConfig.
- In case that measIdleCarrierListEUTRA is included in measIdleConfig, the received measIdleCarrierListEUTRA may be stored in VarMeasIdleConfig.
- In case that the validityAreaList is included in measIdleConfig, the received validityAreaList may be stored in VarMeasIdleConfig.

In operation 7-20, the UE in RRC connected mode may transition to the RRC idle mode. The UE in RRC idle mode manages a registered PLMN (RPLMN) and/or selected PLMN and/or equivalent PLMN (EPLMN) list.

In operation 7-25, the UE in RRC idle mode may acquire system information and camp on a suitable NR cell. The suitable NR cell may refer to a suitable NR cell belonging to the RPLMN and/or selected PLMN and/or EPLMN list having been specified in operation 7-20.

In operation 7-30, the UE in RRC idle mode may acquire or update the idle/inactive measurement configuration based on measIdleConfig, which is included in the RRCRelease message in operation 7-10, and the system information acquired in operation 7-25.

In operation 7-35, the UE in RRC idle mode may perform idle/inactive measurement. Specifically, the UE in RRC idle mode may perform idle/inactive measurement while the T331 timer is running, and the detailed UE operation is as follows.
1> perform the measurements in accordance with the following:
   ** 2> if the *VarMeasIdleConfig* includes the *measIdleCarrierListEUTRA* and the SIB1 contains *idleModeMeasurementsEUTRA:*
      **** 3> for each entry in *measIdleCarrierListEUTRA* within *VarMeasIdleConfig:*
         ****** 4> if UE supports NE-DC between the serving carrier and the carrier frequency indicated by *carrierFreqEUTRA* within the corresponding entry:
            * * * * * * * * 5> perform measurements in the carrier frequency and bandwidth indicated by *carrierFreq* and *allowedMeasBandwidth* within the corresponding entry;
            * * * * * * * * 5> if the *reportQuantitiesEUTRA* is set to rsrq:
               ********** 6> consider RSRQ as the sorting quantity;
            ******** 5> else:
               ********** 6> consider RSRP as the sorting quantity;
            ******** 5> if the *measCellListEUTRA* is included:
               ********** 6> consider cells identified by each entry within the *measCellListEUTRA* to be applicable for idle/inactive mode measurement reporting;
            ******** 5> else:
               * * * * * * * * * * 6> consider up to *maxCellMeasIdle* strongest identified cells, according to the sorting quantity, to be applicable for idle/inactive measurement reporting;
            * * * * * * * * 5> for all cells applicable for idle/inactive measurement reporting, derive measurement results for the measurement quantities indicated by *reportQuantitiesEUTRA ;*
            * * * * * * * * 5> store the derived measurement results as indicated by reportQuantitiesEUTRA within the measReportIdleEUTRA in VarMeasIdleReport in decreasing order of the sorting quantity, i.e., the best cell is included first, as follows:
               ********** 6> if *qualityThresholdEUTRA* is configured:
                  ************ 7> include the measurement results from the cells applicable for idle/inactive measurement reporting whose RSRP/RSRQ measurement results are above the value(s) provided in *qualityThresholdEUTRA;*
               ********** 6> else:
                  ************ 7> include the measurement results from all cells applicable for idle/inactive measurement reporting;
   ** 2> if the *VarMeasIdleConfig* includes the *measIdleCarrierListNR* and the SIB1 contains *idleModeMeasurementsNR:*
      **** 3> for each entry in *measIdleCarrierListNR* within *VarMeasIdleConfig* that contains *ssb-MeasConfig:*
         ****** 4> if UE supports carrier aggregation or NR-DC between serving carrier and the carrier frequency and subcarrier spacing indicated by *carrierFreq* and *ssbSubCarrierSpacing* within the corresponding entry:
            ******** 5> perform measurements in the carrier frequency and subcarrier spacing indicated by *carrierFreq* and *ssbSubCarrierSpacing* within the corresponding entry;
            * * * * * * * * 5> if the *reportQuantities* is set to rsrq:
               ********** 6> consider RSRQ as the cell sorting quantity;
            ******** 5> else:
               ********** 6> consider RSRP as the cell sorting quantity;
            * * * * * * * * 5> if the *measCellListNR* is included:
               ********** 6> consider cells identified by each entry within the *measCellListNR* to be applicable for idle/inactive measurement reporting;
            ******** 5> else:
               ********** 6> consider up to *maxCellMeasIdle* strongest identified cells, according to the sorting quantity, to be applicable for idle/inactive measurement reporting;
            ******** 5> for all cells applicable for idle/inactive measurement reporting and for the serving cell, derive cell measurement results for the measurement quantities indicated by *reportQuantities;*
            ******** 5> store the derived cell measurement results as indicated by *reportQuantities* for the serving cell within *measResultServingCell* in the *measReportIdleNR* in *VarMeasIdleReport;*
            * * * * * * * * 5> store the derived cell measurement results as indicated by *reportQuantities* for cells applicable for idle/inactive measurement reporting within the *measReportIdleNR* in *VarMeasIdleReport* in decreasing order of the cell sorting quantity, i.e., the best cell is included first, as follows:
               ********** 6> if *qualityThreshold* is configured:
                  ************ 7> include the measurement results from the cells applicable for idle/inactive measurement reporting whose RSRP/RSRQ measurement results are above the value(s) provided in *qualityThreshold;*
               ********** 6> else:
                  ************ 7> include the measurement results from all cells applicable for idle/inactive measurement reporting;
            ******** 5> if *beamMeasConfigIdle* is included in the associated entry in *measIdleCarrierListNR,* for each cell in the measurement results:
               ********** 6> derive beam measurements based on SS/PBCH block for each measurement quantity indicated in *reportQuantityRS-IndexesNR,* as described in TS 38.215;
               * * * * * * * * * * 6> if the *reportQuantityRS-Indexes* is set to rsrq:
                  ************ 7> consider RSRQ as the beam sorting quantity;
               ********** 6> else:
                  ************ 7> consider RSRP as the beam sorting quantity;
               ********** 6> set *resultsSSB-Indexes* to include up to *maxNrofRS-IndexesToReport* SS/PBCH block indexes in order of decreasing beam sorting quantity as follows:
                  ************ 7> include the index associated to the best beam for the sorting quantity and if *absThreshSS-BlocksConsolidation* is included, the remaining beams whose sorting quantity is above *absThreshSS-BlocksConsolidation;*
               ********** 6> if the *includeBeamMeasurements* is set to true:
                  ************ 7> include the beam measurement results as indicated by *reportQuantityRS-Indexes;*

Through operation 7-35, the UE in RRC idle mode may store early measurement results (idle/inactive measurement results) in VarMeasIdleReport, and a measurement result for NR (measReportIdleNR) and/or a measurement result for EUTRA (measReportIdleEUTRA) may be stored in the VarMeasIdleReport.

In operation 7-30 or operation 7-35, the UE in RRC idle mode according to an embodiment of the disclosure proposes to store single plmn-Identity or plmn-IdentityList in VarMeasIdleReport in order to check RPLMN later before or when performing early measurement.

Method 1: single plmn-Identity is stored in VarMeasIdleReport. Single plmn-Identity may be set to an RPLMN value. (See Table 7 below)

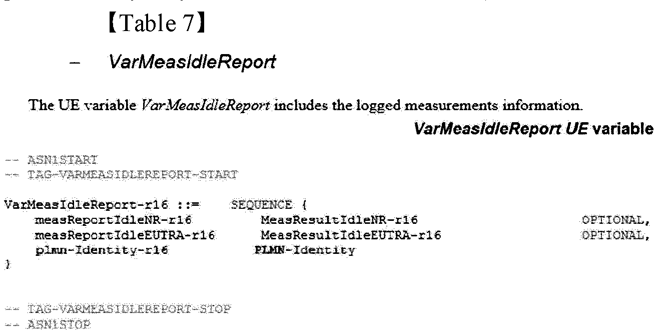

Method 2: plmn-IdentityList is stored in VarMeasIdleReport. The plmn-IdentityList may be set to the values of the EPLMN list and RPLMN stored in the UE (see Table 8 below).

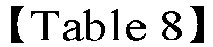

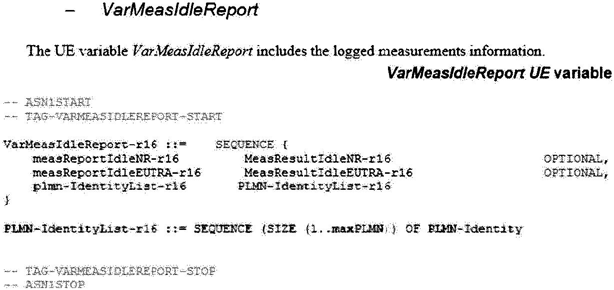

In operation 7-40, the UE in RRC idle mode may reselect the PLMN. The reselected PLMN may refer to a PLMN, which does not belong to the RPLMN and/or selected PLMN and/or EPLMN List specified in operation 7-20.

In operation 7-43, the UE in RRC idle mode may camp on a suitable NR cell belonging to the reselected PLMN.

In operation 7-45, the UE may transmit an RRC connection setup request message (RRCSetupRequest) to the NR base station to initiate an initial registration procedure since the UE in RRC idle mode has reselected the PLMN. In operation 7-50, the NR base station may transmit an RRC connection setup message (RRCSetup) to the UE. Upon receiving the RRC connection setup message, the UE may apply the RRC connection setup message and transition to the RRC connected mode.

In operation 7-55, the UE in RRC connected mode may transmit an RRC connection setup completion message (RRCSetupComplete) to the NR base station. The RRC connection setup completion message may include the following information.
- dedicatedNAS-Message: registration request (registration type: initial registration)

The RRC connection setup completion message includes the idleMeasAvailable indicator only when the following conditions are satisfied in operation 7-55.
- When method 1 above is applied,
   ** 2> if the SIB1 contains *idleModeMeasurementsNR* and the UE has NR idle/inactive measurement information concerning cells other than the PCell available in *VarMeasIdleReport;* or
   ** 2> if the SIB1 contains *idleModeMeasurementsEUTRA* and the UE has E-UTRA idle/inactive measurement information available in VarMeasIdleReport; and the RPLMN is equal to *plmn-Identity* stored in *VarMeasIdleReport;*
      **** 3> include the *idleMeasAvailable;*
- If method 2 above is applied,
   ** 2> if the SIB1 contains *idleModeMeasurementsNR* and the UE has NR idle/inactive measurement information concerning cells other than the PCell available in *VarMeasIdleReport;* or
   ** 2> if the SIB 1 contains *idleModeMeasurementsEUTRA* and the UE has E-UTRA idle/inactive measurement information available in VarMeasIdleReport; and the RPLMN is included in *plmn-IdentityList* stored in *VarMeasIdleReport;*
      **** 3> include the *idleMeasAvailable;*

In operation 7-60, the NR base station may deliver the dedicatedNAS-Message (i.e., registration request message) included in the received RRC connection setup completion message to the AMF. The NR base station may be configured not to perform decoding of the dedicatedNAS-Message, and thus not to identify information included in the dedicatedNAS-Message.

In operation 7-75, the AMF may transmit a registration accept message to the NR base station in response to operation 7-60.

In operation 7-80, the NR base station may include the received registration accept message in the RRC message and transmit the information to the UE in RRC connected mode. As an example, the RRC message may refer to DLInformationTransfer.

In operation 7-85, for a predetermined reason, the NR base station may transmit a UEInformationRequest message to the UE. The UEInformationRequest message may include an indicator (idleModeMeasurementReq) to report early measurement results measured in RRC idle mode or RRC inactive mode.

In operation 7-90, the UE may transmit a UEInformationResponse message to the NR base station. The UE according to an embodiment of the disclosure is to propose accommodating the early measurement results measured in the RRC idle mode or RRC inactive mode only when the following conditions are satisfied.
- if method 1 applies;
   1> if the *idleModeMeasurementReq* is included in the *UEInformationRequest* and the UE has stored *VarMeasIdleReport* that contains measurement information concerning cells other than the PCell and the RPLMN is equal to *plmn-Identity* stored in *VarMeasIdleReport;*
      ** 2> set the *measResultIdleEUTRA* in the *UEInformationResponse* message to the value of *measReportIdleEUTRA* in the *VarMeasIdleReportEUTRA, if available;*
      ** 2> set the *measResultIdleNR* in the UEInformationResponse message to the value of *measReportIdleNR* in the *VarMeasIdleReport,* if available;
      ** 2> discard the *VarMeasIdleReport* upon successful delivery of the *UEInformationResponse* message confirmed by lower layers;
- if method 2 applies;
   1> if the *idleModeMeasurementReq* is included in the *UEInformationRequest* and the UE has stored *VarMeasIdleReport* that contains measurement information concerning cells other than the PCell and the RPLMN is included in *plmn-IdentityList* stored in *VarMeasIdleReport;*
      ** 2> set the *measResultIdleEUTRA* in the *UEInformationResponse* message to the value of *measReportIdleEUTRA* in the *VarMeasIdleReportEUTRA, if available;*
      ** 2> set the *measResultIdleNR* in the *UEInformationResponse* message to the value of *measReportIdleNR* in the *VarMeasIdleReport,* if available;
      ** 2> discard the *VarMeasIdleReport* upon successful delivery of the *UEInformationResponse* message confirmed by lower layers;

The UE according to an embodiment of the disclosure may be configured to perform RPLMN checking before transmitting early measurement results to the base station, and transmit the early measurement results to the base station only when the RPLMN checking condition is satisfied. Accordingly, the conventional problems can be solved.

FIGS. 5, 6, and 7 have been illustrated for a UE in RRC idle mode for the convenience of explanation, the same principle may be applied to a UE in RRC inactive mode, and the same principle may be applied to the LTE system.

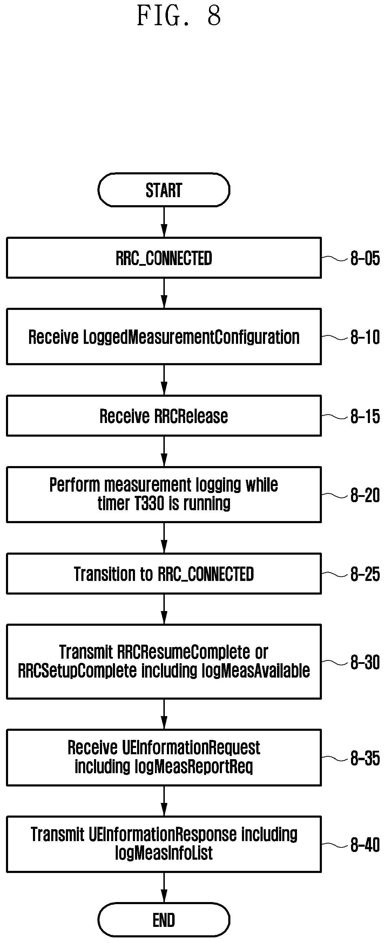

FIG. 8 is a flowchart illustrating a UE operation in which a UE collects and reports cell measurement information according to an embodiment of the disclosure.

Referring to FIG. 8, the UE may be in an RRC connected mode (RRC _CONNECTED) by establishing an RRC connection with an NR base station (operation 8-05).

In operation 8-10, the UE in RRC connected mode may receive a LoggedMeasurementConfiguration message from the NR base station. Upon receiving the LoggedMeasurementConfiguration, the UE in RRC connected mode according to the prior art may perform the following series of processes.
1> discard the logged measurement configuration as well as the logged measurement information as specified in 5.5a.2;
1> store the received *loggingDuration, loggingInterval* and *areaConfiguration,* if included, in *VarLogMeasConfig;*
1> if the *LoggedMeasurementConfiguration* message includes *plmn-IdentityList:*
   ** 2> set *plmn-IdentityList* in *VarLogMeasReport* to include the RPLMN as well as the PLMNs included in *plmn-IdentityList;*
1> else:
   ** 2> set *plmn-IdentityList* in *VarLogMeasReport* to include the RPLMN;
1> store the received *absoluteTimeInfo, traceReference, traceRecordingSessionRef,* and *tce-Id* in *VarLogMeasReport;*
1> store the received *bt-NameList,* if included, in *VarLogMeasConfig;*
1> store the received *wlan-Namelist,* if included, in *VarLogMeasConfig;*
1> store the received *sensor-Namelist,* if included, in *VarLogMeasConfig;*
1> store the received *reportType* in *VarLogMeasConfig;*
1> start timer T330 with the timer value set to the *loggingDuration;*

The UE in RRC connected mode according to the prior art has a disadvantage of unnecessarily storing the loggingInterval twice in VarLogMeasConfig to perform the above operation. This is because loggingInterval is included in reportType. (See Table 9 below)

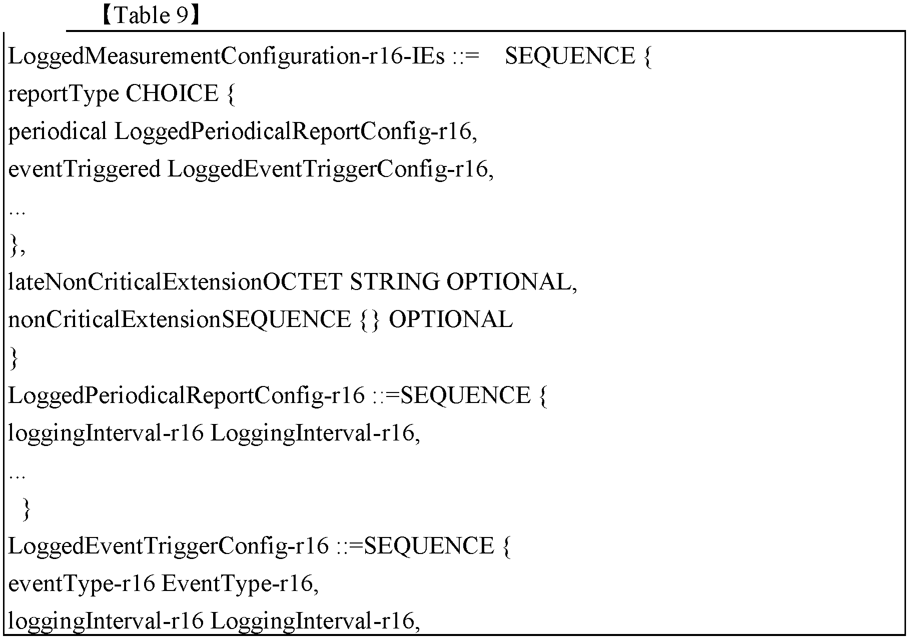

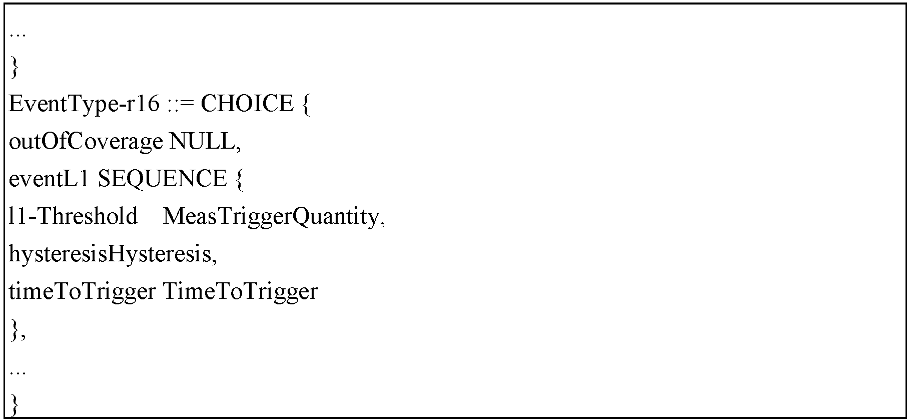

Upon receiving the LoggedMeasurementConfiguration, the UE in RRC connected mode according to an embodiment of the disclosure proposes to perform the following modified series of processes.
1> discard the logged measurement configuration as well as the logged measurement information as specified in 5.5a.2;
1> store the received *loggingDuration, reportType* and *areaConfiguration,* if included, in *VarLogMeasConfig;*
1> if the *LoggedMeasurementConfiguration* message includes *plmn-IdentityList:*
   ** 2> set *plmn-IdentityList* in *VarLogMeasReport* to include the RPLMN as well as the PLMNs included in *plmn-IdentityList;*
1> else:
   ** 2> set *plmn-IdentityList* in *VarLogMeasReport* to include the RPLMN;
1> store the received *absoluteTimeInfo, traceReference, traceRecordingSessionRef,* and *tce-Id* in *VarLogMeasReport;*
1> store the received *bt-NameList,* if included, in *VarLogMeasConfig;*
1> store the received *wlan-Namelist,* if included, in *VarLogMeasConfig;*
1> store the received *sensor-Namelist,* if included, in *VarLogMeasConfig;*
1> start timer T330 with the timer value set to the *loggingDuration;*

In operation 8-15, the UE in RRC connected mode may receive an RRCRelease message from the NR base station. If suspendConfig is included in the RRCRelease message, the UE may transition to the RRC inactive mode (RRC_INACIVE), and if suspendConfig is not included in the RRCRelease message, the UE may transition to the RRC idle mode (RRC_IDLE). The UE in RRC idle mode or RRC inactive mode may acquire system information and camp on an NR suitable cell.

In operation 8-20, the UE in RRC idle mode or RRC inactive mode may perform measurement logging while the timer T330 is running. The detailed measurement logging operation is as follows.
1> perform the logging in accordance with the following:
   ** 2> if the *reportType* is set to *periodical* in the *VarLogMeasConfig:*
      **** 3> if the UE is camping normally on an NR cell and if the RPLMN is included in *plmn-IdentityList* stored in *VarLogMeasReport* and, if the cell is part of the area indicated by *areaConfiguration* if configured in *VarLogMeasConfig:*
         ****** 4> perform the logging at regular time intervals, as defined by the *loggingInterval* in the *VarLogMeasConfig;*
   ** 2> else if the *reportType* is set to *eventTriggered,* and *eventType* is set to *outOfCoverage:*
      **** 3> perform the logging at regular time intervals as defined by the *loggingInterval* in *VarLogMeasConfig* only when the UE is in any cell selection state;
      **** 3> perform the logging immediately upon transitioning from the any cell selection state to the camped normally state;
   ** 2> else if the *reportType* is set to *eventType* and *eventType* is set to *eventL1:*
      **** 3> if the UE is camping normally on an NR cell and if the RPLMN is included in *plmn-IdentityList* stored in *VarLogMeasReport* and, if the cell is part of the area indicated by *areaConfiguration* if configured in *VarLogMeasConfig;*
         ****** 4> perform the logging at regular time intervals as defined by the *loggingInterval* in *VarLogMeasConfig* only when the conditions indicated by the *eventL1* are met;
   ** 2> when performing the logging:
      **** 3> set the *relative TimeStamp* to indicate the elapsed time since the moment at which the logged measurement configuration was received;
      **** 3> if detailed location information became available during the last logging interval, set the content of the *locationInfo* as in 5.3.3.7:
      **** 3> if the UE is in any cell selection state (as specified in TS 38.304):
         ****** 4> set *anyCellSelectionDetected* to indicate the detection of no suitable or no acceptable cell found;
         ****** 4> set the *servCellIdentity* to indicate global cell identity of the last logged cell that the UE was camping on;
         ****** 4> set the *measResultServCell* to include the quantities of the last logged cell the UE was camping on;
      ****3> else:
         ****** 4> set the *servCellIdentity* to indicate global cell identity of the cell the UE is camping on;
         ****** 4> set the *measResultServCell* to include the quantities of the cell the UE is camping on;
         ****** 4> if available, set the *measResultNeighCells,* in order of decreasing ranking-criterion as used for cell re-selection, to include neighbouring cell measurements that became available during the last logging interval for at most the following number of neighbouring cells: 6 intra-frequency and 3 inter-frequency neighbours per frequency as well as 3 inter-RAT neighbours, per frequency/ set of frequencies per RAT and according to the following:
            ******** 5> for each neighbour cell included, include the optional fields that are available;
               NOTE: The UE includes the latest results of the available measurements as used for cell reselection evaluation in RRC_IDLE or RRC_INACTIVE or as used for evaluation of reporting criteria or for measurement reporting according to 5.5.3 in RRC_CONNECTED, which are performed in accordance with the performance requirements as specified in TS 38.133.
   ** 2> when the memory reserved for the logged measurement information becomes full, stop timer T330 and perform the same actions as performed upon expiry of T330, as specified in 5.5a.1.4.

In case that interFreqTargetList is included in the LoggedMeasurementConfiguration message having been received in operation 8-10, the UE in RRC idle mode or RRC inactive mode according to the prior art may perform measurement logging for a frequency list indicated in the interFreqTartList (+ a cellist configured in each frequency list). Specifically, the UE in RRC idle mode or RRC inactive mode may perform measurement logging only in case that a frequency of a frequency list indicated in interFreqTargetList matches a frequency of a frequency list included in SIB4 broadcast by a currently camped-on cell (serving cell) (See Table 10 below). The UE in RRC idle mode or RRC inactive mode according to the prior art does not perform measurement logging for NR intra-frequency neighbour cells and inter-RAT frequency neighbour cells when interFreqTargetList is accommodated in the LoggedMeasurementConfiguration message. That is, only in case that interFreqTartList is not configured in the LoggedMeasurementConfiguration message, the UE in RRC idle mode or RRC inactive mode is configured to perform measurement logging for NR intra-frequency neighbour cells and inter-RAT frequency neighbour cells.

**[Table 10]**

| ***AreaConfiguration* field descriptions** |
|---|
| ***InterFreqTargetInfo*** |
| If configured, it indicates the frequency for which UE is requested to perform measurement logging for neighbour cells. UE should perform measurement logging for the frequency in SIB4 of the current serving cell whose DL-carrierfrequency is included in the InterFreqTargetList. If not configured, the UE should perform measurement logging for all the neighbour cells. |

When interFreqTargetList is included in the LoggedMeasurementConfiguration message having been received in operation 8-10, the UE in RRC idle mode or RRC inactive mode according to an embodiment of the disclosure is to propose to perform measurement logging through at least one of the following methods (multiple methods may be applied).

Method 1: Regardless of whether interFreqTargetList is configured in the LoggedMeasurementConfiguration message, a UE in RRC idle mode or RRC inactive mode may perform measurement logging for NR intra-frequency neighbour cells and inter-RAT frequency neighbour cells. That is, the method 1 is characterized in that interFreqTargetList controls measurement logging for NR inter-frequency neighbour cells (See Table 11).

**[Table 11]**

| ***AreaConfiguration* field descriptions** |
|---|
| ***InterFreqTargetInfo*** |
| If configured, it indicates the frequency for which UE is requested to perform measurement logging for NR inter-frequency neighbour cells. UE should perform measurement logging for the frequency in SIB4 of the current serving cell whose DL-carrier frequency is included in the *interFreqTargetList.* If not configured, the UE should perform measurement logging for all the NR inter-frequency neighbour cells. |

Method 2: By introducing intrainterFreqTargetList into the LoggedMeasurementConfiguration message, a UE in RRC idle mode or RRC inactive mode may perform measurement logging only in case that a frequency of a frequency list indicated in the intrainterFreqTargetList matches a frequency of a frequency list included in SIB3 and/or SIB4 broadcast by a currently camped-on cell (serving cell). That is, the UE in RRC idle mode or RRC inactive mode according to method 2 may be configured, when intrainterFreqTargetList is configured, not to perform measurement logging for inter-RAT frequency neighbour cells (see Table 12).

**[Table 12]**

| ***AreaConfiguration* field descriptions** |
|---|
| ***IntraInterFreqTargetInfo*** |
| If configured, it indicates the frequency for which UE is requested to perform measurement logging for NR intra-frequency/inter-frequency neighbour cells. UE should perform measurement logging for the frequency in SIB3 or SIB4 of the current serving cell whose DL-carrier frequency is included in the *intraInterFreqTargetList.* If not configured, the UE should perform measurement logging for all the NR intra-frequency/inter-frequency neighbour cells. |

Method 3: By introducing interRATFreqTaretList in the LoggedMeasurementConfiguration message, a UE in RRC idle mode or RRC inactive mode may be configured to perform measurement logging only in case that a frequency of a frequency list indicated in interRATFreqTaretList matches a frequency of a frequency list included in SIB5 (EUTRA) and new SIB (other RAT except NR) broadcast by a currently camped-on cell (serving cell).

In operation 8-25, the UE in RRC idle mode or the RRC inactive mode may transition to an RRC connected mode by establishing or resuming the RRC connection with the NR base station.

In operation 8-30, the UE having transitioned to the RRC connected mode from the RRC idle mode may transmit an RRCSetupComplete message to the NR base station. When the following condition is satisfied, the UE may include an indicator indicating that logged measurements are included in the RRCSetupComplete message.
** 2> if the UE has logged measurements available for NR and if the RPLMN is included in *plmn-IdentityList* stored in *VarLogMeasReport:*
   **** 3> include the *logMeasAvailable* in the *RRCSetupComplete* message;
      In operation 8-30, the UE having transitioned to the RRC connected mode from the RRC inactive mode may transmit an RRCResumeComplete message to the NR base station. When the following condition is satisfied, the UE may include an indicator (logMeasAvailable) indicating that logged measurements are included in the RRCResumeComplete message.
** 2> if the UE has logged measurements available for NR and if the RPLMN is included in *plmn-IdentityList* stored in *VarLogMeasReport:*
   **** 3> include the *logMeasAvailable* in the *RRCResumeComplete* message;

In operation 8-35, the UE in RRC connected mode may receive a UEInformationRequest message from the NR base station. The UEInformationRequest message may include an indicator (logMeasReportReq) to report logged measurements.

In operation 8-40, the UE in RRC connected mode may transmit a UEInformationResponse message to the NR base station. Through the UEInformationResponse message, logged measurements measured and stored in operation 8-20 may be transmitted when the following conditions are satisfied.
1> if the *logMeasReportReq* is present and if the RPLMN is included in *plmn-IdentityList* stored in *VarLogMeasReport:*
   If the above condition is satisfied, the UE may transmit a UEInformationResponse message to the NR base station through the following series of processes.
   ** 2> if *VarLogMeasReport* includes one or more logged measurement entries, set the contents of the *logMeasReport* in the UEInformationResponse message as follows:
      **** 3> include the *absolute TimeStamp* and set it to the value of *absoluteTimeInfo* in the *VarLogMeasReport;*
      **** 3> include the *traceReference* and set it to the value of *traceReference* in the *VarLogMeasReport;*
      **** 3> include the *traceRecordingSessionRef* and set it to the value of *traceRecordingSessionRef* in the *VarLogMeasReport;*
      **** 3> include the *tce-Id* and set it to the value of *tce-Id* in the *VarLogMeasReport;*
      **** 3> include the *logMeasInfoList* and set it to include one or more entries from *VarLogMeasReport* starting from the entries logged first;
      **** 3> if the *VarLogMeasReport* includes one or more additional logged measurement entries that are not included in the *logMeasInfoList* within the UEInformationResponse message:
         ****** 4> include the *logMeasAvailable;*
      **** 3> if the *VarLogMeasReport* includes one or more additional logged Bluetooth measurement entries that are not included in the *logMeasInfoList* within the UEInformationResponse message:
         ****** 4> include the *logMeasAvailableBT;*
      **** 3> if the *VarLogMeasReport* includes one or more additional logged WLAN measurement entries that are not included in the *logMeasInfoList* within the UEInformationResponse message:
         ****** 4> include the *logMeasAvailableWLAN;*

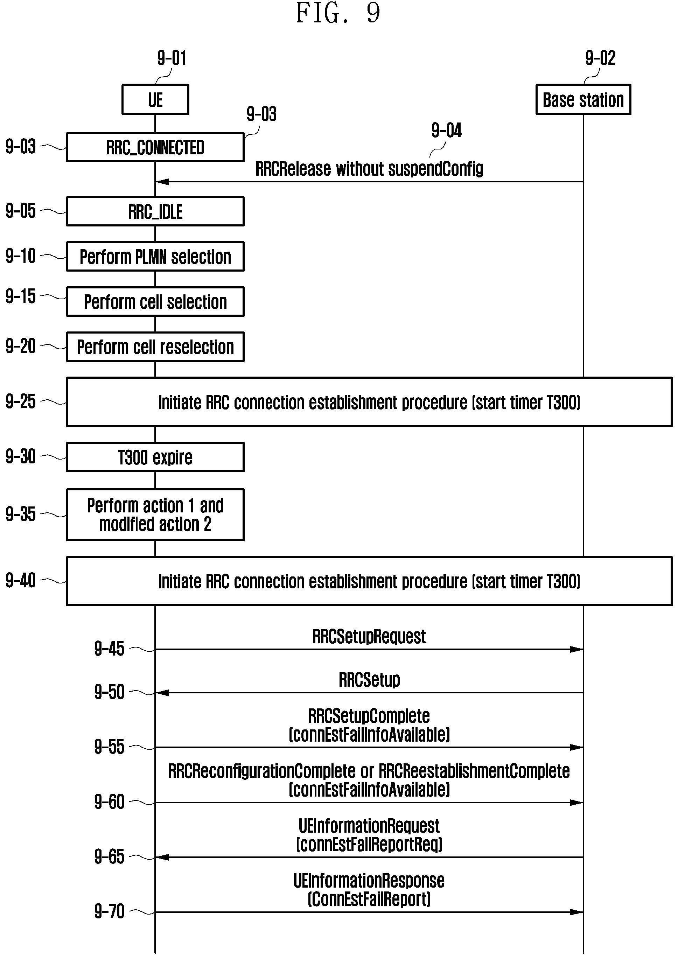

FIG. 9 is a flowchart of a process in which a UE collects RRC connection establishment failure information or RRC connection resumption failure information and reports the collected information to an NR base station in an NR system according to an embodiment of the disclosure.

Referring to FIG. 9, a UE 9-01 may be in an RRC connected mode (RRC_CONNECTED) by establishing an RRC connection with an NR base station 9-02 (operation 9-03).

In operation 9-04, the NR base station 9-02 may transmit an RRCRelease message, in which suspend configuration information (suspendConfig) is not included, to the UE 9-01.

Upon receiving the RRCRelease message not including the suspend configuration information (suspendConfig), the UE may transition to the RRC idle mode (RRC_IDLE) in operation 9-05.

In operation 9-10, the UE 9-01 in the RRC idle mode may perform a PLMN selection process. An AS layer of the UE may report one or multiple available PLMNs to an NAS layer device due to a request of the NAS layer or autonomously (In the UE, the AS shall report available PLMNs to the NAS on request from the NAS or automatically). Specifically, the UE may scan all RF channels in the NR bands according to the UE capabilities to find available PLMNs (The UE shall scan all RF channels in the NR bands according to its capabilities to find available PLMNs). For each carrier, the UE may search for a cell having the strongest signal and read system information from the cell, in order to search for one or multiple PLMNs to which the cell belongs (On each carrier, the UE shall search for the strongest cell and read its system information, in order to find out which PLMN(s) the cell belongs to). If the UE may read one or multiple PLMN identities in the cell having the strongest signal, in case that the following high-quality conditions are satisfied with respect to each PLMN, the UE may report the PLMN as a high quality PLMN to the NAS layer device (If the UE may read one or several PLMN identities in the strongest cell, each found PLMN shall be reported to the NAS as a high quality PLMN (but without the RSRP value), provided that the following high-quality criterion is fulfilled).
- High-quality condition: For an NR cell, the measured RSRP value shall be greater than or equal to -110 dBm

In case that the UE may read the PLMN identities whereas the found PLMNs do not satisfy the high-quality criterion, RSRP measurement values and PLMN identities may be reported to the NAS layer device (Found PLMNs that do not satisfy the high-quality criterion but for which the UE has been able to read the PLMN identities are reported to the NAS together with their corresponding RSRP values). The measurement value reported to the NAS layer device should be a value for each PLMN found in each cell (The quality measure reported by the UE to NAS shall be the same for each PLMN found in one cell).

The PLMN selection process may not be performed according to the request of the NAS layer device (The search for PLMNs may be stopped on request from the NAS). The UE may optimize the PLMN selection process by using the stored information (refer to, for example, frequencies and information about cell parameters obtainable from previously optionally received measurement control information elements).

In case that the UE 9-01 in the RRC idle mode has performed the PLMN selection, the UE may perform a cell selection process to camp on a suitable cell for the corresponding PLMN in operation 9-15 (Once the UE has selected a PLMN, the cell selection procedure shall be performed in order to select a suitable cell of that PLMN to camp on).

In operation 9-20, the UE 9-01 in the RRC idle mode may perform a cell reselection process to find a better suitable cell.

In operation 9-25, the UE 9-01 in the RRC idle mode may initiate an RRC connection establishment procedure with the NR base station 9-02. Upon initiation of the RRC connection establishment procedure, the UE may start timer T300. Upon reception of RRCSetup or RRCReject message from a base station, cell re-selection and upon abortion of connection establishment by upper layers, the UE may stop the running timer T300.

In operation 9-30, the timer T300 driven by the UE in operation 9-25 may expire.

When the timer T300 expires, the UE according to the prior art may perform the following actions 1 and 2 sequentially, in operation 9-35.
- Action 1: an action unrelated to VarConnEstFailReport (Perform action 1 as follows, sequentially)
   * reset MAC, release the MAC configuration and re-establish RLC for all RBs that are established
   * if the T300 has expired a consecutive connEstFailCount times on the same cell for which connEstFailureControl is included in SIB1, for a period as indicated by connEstFailOffsetValidity, use connEstFailOffset for the parameter Qoffsettemp for the concerned cell when performing cell selection and reselection according to TS 38.304 and TS 36.304
- Action 2: an action related to VarConnEstFailReport (Perform action 2 as follows, sequentially)
   * if the UE has connection establishment failure information or connection resume failure information available in VarConnEstFailReport and if the RPLMN is not equal to plmn-identity stored in VarConnEstFailReport, reset the numberOfConnFail to 0
   * if the global cell identity of current cell is not equal to (or does not belong to) the global cell identity stored in measResultFailedCell in VarConnEstFailReport, reset the numberOfConnFail to 0
   * store the following connection establishment failure information in the VarConnEstFailReport by setting its fields as follows:
      *** set the plmn-Identity to the PLMN selected by upper layers (see TS 23.122, TS 24.501) from the PLMN(s) included in the plmn-IdentityList in SIB1
      *** set the measResultFailedCell to include the global cell identity, tracking area code, the cell level and S S/PBCH block RSRP, and RSRQ, of the failed cell based on the available SSB measurements collected up to the moment the UE detected connection establishment failure
      *** if available, set the measResultNeighCells, in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies per RAT and according to the following: for each neighbour cell included, include the optional fields that are available
      *** if available, set the locationInfo as follows:
         ***** if available, set the commonLocationInfo to include the detailed location information
         ***** if available, set the bt-LocationInfo to include the Bluetooth measurement results, in order of decreasing RSSI for Bluetooth beacons
         ***** if available, set the wlan-LocationInfo to include the WLAN measurement results, in order of decreasing RSSI for WLAN Aps
         ***** if available, set the sensor-LocationInfo to include the sensor measurement results
      *** set perRAInfoList to indicate random access failure information as specified in 5.7.10.5
      *** if the numberOfConnFail is smaller than 9, increment the numberOfConnFail by 1
   * inform upper layers about the failure to establish the RRC connection, upon which the procedure ends

When a UE according to the prior art performs the following operations during action 2, three problems may occur.
*** set the measResultFailedCell to include the global cell identity, tracking area code, the cell level and SS/PBCH block level RSRP, and RSRQ, of the failed cell based on the available SSB measurements collected up to the moment the UE detected connection establishment failure
   - Problem 1: Cell level RSRQ and SS/PBCH block level RSRQ may not be included in measResultFailedCell.
   - Problem 2: SS/PBCH block index(es) may not be included in measResultFailedCell.
   - Problem 3: Measurement results for SS/PBCH block may be included in measResultFailedCell without being sorted.

In order to solve the above problems, a terminal according to an embodiment of the disclosure proposes to perform the above-described actions 1 and 2 sequentially, wherein at the time of setting measResultFailedCell during action 2, one of the following methods is selected to perform a modified action.

### Method 1: no sorted beam reporting

*** set the measResultFailedCell to include the global cell identity, tracking area code, the cell level and SS/PBCH block RSRP, and cell level and SS/PBCH block level RSRQ and SS/PBCH block index(es) of the failed cell based on the available SSB measurements collected up to the moment the UE detected connection establishment failure

### Method 2: sorted beam reporting

*** set the measResultFailedCell to include the global cell identity, tracking area code, the cell level and SS/PBCH block RSRP, and cell level and SS/PBCH block level RSRQ and SS/PBCH block index(es) of the failed cell ordered such that the highest SS/PBCH block RSRP is listed first if SS/PBCH block RSRP measurement results are available, otherwise the highest SS/PBCH block RSRQ is listed first if SS/PBCH block RSRQ measurement results are available based on the available SSB measurements collected up to the moment the UE detected connection establishment failure

In operation 9-40, the UE 9-01 in the RRC idle mode may initiate an RRC connection establishment procedure with the NR base station 9-02. Upon initiation of the RRC connection establishment procedure, the UE may start timer T300.

In operation 9-45, the UE 9-01 in the RRC idle mode may transmit an RRCSetupRequest message to the NR base station 9-02.

In operation 9-50, the NR base station 9-02 may transmit an RRCSetup message to the UE 9-01 in the RRC idle mode. Upon receiving the RRCSetup message, the UE may transition to the RRC connected mode after applying the information included in the RRCSetup message (operation 9-51).

In operation 9-55, when the connection establishment failure information is included in VarConnEstFailReport and the plmn-Identity stored in VarConnEstFailReport matches RPLMN, the UE 9-01 having transitioned to the RRC connected mode may include connEstFailInfoAvailable indicator in the RRCSetupComplete message and transmit the same to the NR base station 9-02.

In operation 9-60, when the connection establishment failure information is included in VarConnEstFailReport and the plmn-Identity stored in VarConnEstFailReport matches the RPLMN, the UE 9-01 in the RRC connected mode may include the connEstFailInfoAvailable indicator in the RRCReconfigurationComplete message or RRCRestablishmentComplete message and transmit the same to the NR base station 9-02.

In operation 9-65, the NR base station 9-02 may transmit a *UEInformationRequest* message to the UE 9-01 by setting connEstFailReportReq to true in the UEInformationRequest message.

In operation 9-70, when the connEstFailReportReq is set to true in the received UEInformationRequest message, the connection establishment failure information is included in VarConnEstFailReport, and the plmn-Identity stored in VarConnEstFailReport is the same as RPLMN, the UE 9-01 may transmit a UEInformationResponse message to the NR base station by performing the following actions.
- set timeSinceFailure in VarConnEstFailReport to the time that elapsed since the last connection establishment failure in NR
- set the connEstFailReport in the UEInformationResponse message to the value of connEstFailReport in VarConnEstFailReport

When successful delivery of the UEInformationResponse message is confirmed by a lower layer device, the UE may discard the ConnEstFailReport included in the VarConnEstFailReport (discard the connEstFailReport from VarConnEstFailReport upon successful delivery of the UEInformationResponse message confirmed by lower layers).

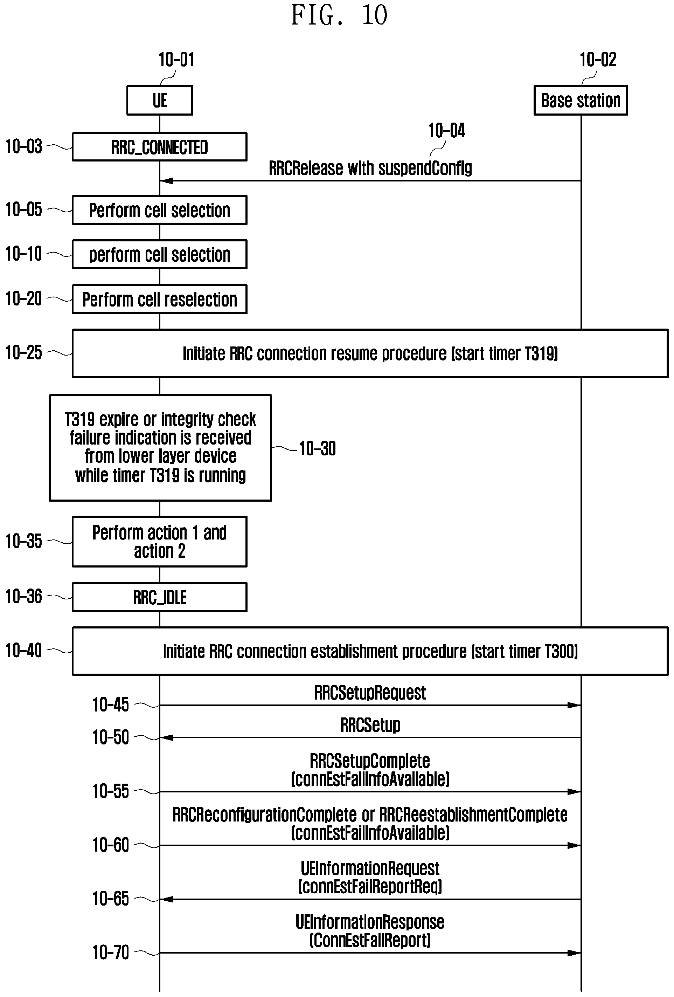

FIG. 10 is a flowchart of a process in which a UE collects RRC connection establishment failure information or connection resumption failure information and reports the information to an NR base station in an NR system according to an embodiment of the disclosure.

RRC connection resumption failure information according to the current embodiment may be interpreted to have the same meaning as that of RRC connection establishment failure information.

Referring to FIG. 10, a UE 10-01 may be in an RRC connected mode (RRC_CONNECTED) by establishing an RRC connection with an NR base station 10-02 (operation 10-03).

In operation 10-04, the NR base station 10-02 may transmit an RRCRelease message including suspend configuration information (suspendConfig) to the UE 10-01.

Upon receiving the RRCRelease message including the suspend configuration information (suspendConfig), the UE may transition to an RRC inactive mode (RRC_INACTIVE) in operation 10-05.

In operation 10-10, the UE 10-01 in the RRC inactive mode may perform a cell selection process to camp on a suitable cell.

In operation 10-20, the UE 10-01 in the RRC inactive mode may perform a cell reselection process to find a better suitable cell.

In operation 10-25, the UE 10-01 in the RRC inactive mode may initiate an RRC connection resume procedure with the NR base station 10-02. Upon initiation of the RRC connection resumption procedure, the UE may start timer T319. The UE may stop the driven timer T319 in a case of receiving RRCResume, RRCSetup, or RRCRelease without suspendConfig, RRCRelease with suspendConfig, and RRCRej ect message from the base station, of performing cell reselection, or when the connection establishment process is stopped by an upper layer device.

In operation 10-30, the T319 timer driven by the UE in operation 10-25 may expire, or the UE may receive an integrity check failure indication from a lower layer device while the T319 timer is running.

When the driven T319 timer expires or upon reception of an integrity check failure indication from the lower layer device while the T319 timer is running, a UE according to the prior art may perform the following actions 1, 2, and 3 sequentially.
- Action 1: an action unrelated to VarConnEstFailReport (Perform action 1 as follows, sequentially)
   * reset MAC, release the MAC configuration and re-establish RLC for all RBs that are established
   * if the T300 has expired a consecutive connEstFailCount times on the same cell for which connEstFailureControl is included in SIB1, for a period as indicated by connEstFailOffsetValidity, use connEstFailOffset for the parameter Qoffsettemp for the concerned cell when performing cell selection and reselection according to TS 38.304 and TS 36.304
- Action 2: an action related to VarConnEstFailReport (Perform action 2 as follows, sequentially)
   * if the UE has connection establishment failure information or connection resume failure information available in VarConnEstFailReport and if the RPLMN is not equal to plmn-identity stored in VarConnEstFailReport, reset the numberOfConnFail to 0
   * if the global cell identity of current cell is not equal to (or does not belong to) the global cell identity stored in measResultFailedCell in VarConnEstFailReport, reset the numberOfConnFail to 0
   * store the following connection resume failure information in the VarConnEstFailReport by setting its fields as follows:
      *** set the plmn-Identity to the PLMN selected by upper layers (see TS 23.122, TS 24.501) from the PLMN(s) included in the plmn-IdentityList in SIB1
      *** set the measResultFailedCell to include the global cell identity, tracking area code, the cell level and S S/PBCH block RSRP, and RSRQ, of the failed cell based on the available SSB measurements collected up to the moment the UE detected connection establishment failure or connection resume failure
      *** if available, set the measResultNeighCells, in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies per RAT and according to the following: for each neighbour cell included, include the optional fields that are available
      *** if available, set the locationInfo as follows:
         ***** if available, set the commonLocationInfo to include the detailed location information
         ***** if available, set the bt-LocationInfo to include the Bluetooth measurement results, in order of decreasing RSSI for Bluetooth beacons
         ***** if available, set the wlan-LocationInfo to include the WLAN measurement results, in order of decreasing RSSI for WLAN Aps
         ***** if available, set the sensor-LocationInfo to include the sensor measurement results
      *** set perRAInfoList to indicate random access failure information as specified in 5.7.10.5
      *** if the numberOfConnFail is smaller than 8, increment the numberOfConnFail by 1
- Action 3: an action unrelated to VarConnEstFailReport (Perform action 3 as follows, sequentially)
   * perform the actions upon going to RRC_IDLE as specified in 3GPP TS 38.331 5.3.11 with release cause `RRC Resume failure'

When a UE according to the prior art performs the following operations during operation 2, three problems may occur.
*** set the measResultFailedCell to include the global cell identity, tracking area code, the cell level and S S/PBCH block RSRP, and RSRQ, of the failed cell based on the available SSB measurements collected up to the moment the UE detected connection establishment failure or connection resume failure
   - Problem 1: Cell level RSRQ and SS/PBCH block level RSRQ may not be included in measResultFailedCell.
   - Problem 2: SS/PBCH block index(es) may not be included in measResultFailedCell.
   - Problem 3: Measurement results for SS/PBCH block may be included in measResultFailedCell without being sorted.

In order to solve the above problems, a terminal according to an embodiment of the disclosure performs the aforementioned actions 1, 2, and 3 sequentially, and proposes, at the time of setting measResultFailedCell during action 2, to select one of methods below to perform a modified action.

### Method 1: no sorted beam reporting

*** set the measResultFailedCell to include the global cell identity, tracking area code, the cell level and SS/PBCH block RSRP, and cell level and SS/PBCH block level RSRQ and SS/PBCH block index(es) of the failed cell based on the available SSB measurements collected up to the moment the UE detected connection establishment failure or connection resume failure

### Method 2: sorted beam reporting

*** set the measResultFailedCell to include the global cell identity, tracking area code, the cell level and SS/PBCH block RSRP, and cell level and SS/PBCH block level RSRQ and SS/PBCH block index(es) of the failed cell ordered such that the highest SS/PBCH block RSRP is listed first if SS/PBCH block RSRP measurement results are available, otherwise the highest SS/PBCH block RSRQ is listed first if SS/PBCH block RSRQ measurement results are available based on the available SSB measurements collected up to the moment the UE detected connection establishment failure or connection resume failure

In operation 10-40, the UE 10-01 in the RRC idle mode may initiate an RRC connection establishment procedure with the NR base station 10-02. Upon initiation of the RRC connection establishment procedure, the UE may start timer T300.

In operation 10-45, the UE 10-01 in the RRC idle mode may transmit an RRCSetupRequest message to the NR base station 10-02.

In operation 10-50, the NR base station 10-02 may transmit an RRCSetup message to the UE 10-01 in the RRC idle mode. Upon receiving the RRCSetup message, the UE may transition to the RRC connected mode after applying the information in the RRCSetup message (operation 10-51).

In operation 10-55, in case that connection establishment failure information is included in VarConnEstFailReport, and that the plmn-Identity stored in VarConnEstFailReport matches the RPLMN, the UE 10-01 having transitioned to the RRC connected mode may include a connEstFailInfoAvailable indicator in the RRCSetupComplete message and transmit the same to the NR base station 10-02.

In operation 10-60, in case that connection establishment failure information is included in VarConnEstFailReport, and that the plmn-Identity stored in VarConnEstFailReport matches the RPLMN, the UE 10-01 in RRC connected mode 10-01 may include the connEstFailInfoAvailable indicator in the RRCReconfigurationComplete message or RRCRestablishmentComplete message and transmit the same to the NR base station 10-02.

In operation 10-65, the NR base station 10-02 may transmit a *UEInformationRequest* message to the UE 10-01 by setting connEstFailReportReq to true in the UEInformationRequest message.

In operation 10-70, when connEstFailReportReq is set to true in the received UEInformationRequest message, the connection establishment failure information is included in VarConnEstFailReport, and the plmn-Identity stored in VarConnEstFailReport is the same as RPLMN, the UE 10-01 may transmit a UEInformationResponse message to the NR base station by performing the following actions.
- set timeSinceFailure in VarConnEstFailReport to the time that elapsed since the last connection establishment failure in NR
- set the connEstFailReport in the UEInformationResponse message to the value of connEstFailReport in VarConnEstFailReport

When successful delivery of the UEInformationResponse message is confirmed by a lower layer device, the UE may discard the ConnEstFailReport included in the VarConnEstFailReport (discard the connEstFailReport from VarConnEstFailReport upon successful delivery of the UEInformationResponse message confirmed by lower layers).

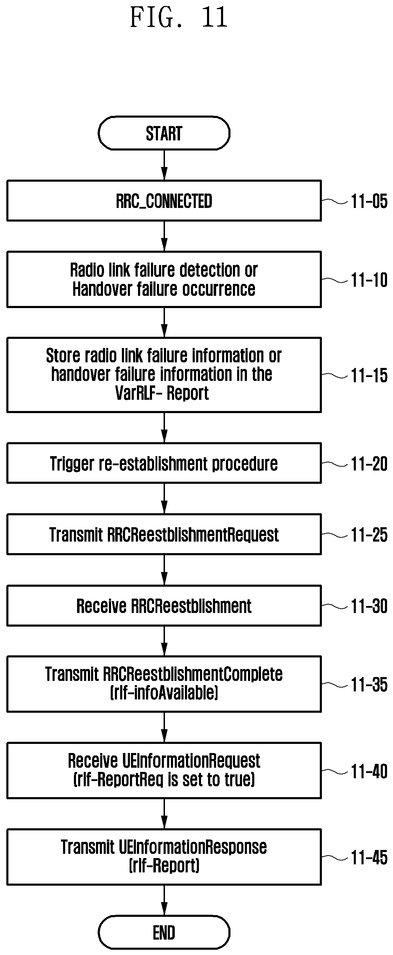

FIG. 11 is a flowchart illustrating a process in which a UE stores and reports radio link failure information or handover failure information during RLF detection or HO failure in an NR system according to an embodiment of the disclosure.

Referring to FIG. 11, the UE may be in an RRC connected mode by establishing an RRC connection with an NR base station (operation 11-05).

In operation 11-10, the UE may detect a radio link failure (RLF) in a master cell group (MCG) or a HO failure may occur.

In operation 11-15, the UE may store radio link failure information or handover failure information in VarRLF-Report by performing the following operation. Here, an embodiment of the disclosure is to propose that a UE additionally performs a part of Table 13 below. That is, a UE according to the disclosure may be characterized in that, when storing information in measResultLastServCell, store a sorted beam measurement result and a beam index mapped thereto. In this case, the added operations of Table 13 may be sequentially performed between the before and after operations of Table 13.

The UE shall determine the content in the *VarRLF-Report* as follows:
1> clear the information included in *VarRLF-Report,* if any;
1> set the *plmn-IdentityList* to include the list of EPLMNs stored by the UE (i.e., includes the RPLMN);
1> set the *measResultLastServCell* to include the cell level RSRP, RSRQ and the available SINR, of the source PCell(in case HO failure) or PCell (in case RLF) based on the available SSB and CSI-RS measurements collected up to the moment the UE detected failure;

**[Table 13]**

| |
|---|
| 1> if the SS/PBCH block-based measurement quantities are available: |
| ** 2> set the *rsIndexResults* in *measResultLastServCell* to include all the available measurement quantities of the source PCell (in case HO failure) or PCell (in case RLF), ordered such that the highest SS/PBCH block RSRP is listed first if SS/PBCH block RSRP measurement results are available, otherwise the highest SS/PBCH block RSRQ is listed first if SS/PBCH block RSRQ measurement results are available, otherwise the highest SS/PBCH block SINR is listed first, based on the available SS/PBCH block based measurements collected up to the moment the UE detected failure; |
| 1> if the CSI-RS-based measurement quantities are available: |
| ** 2> set the *rsIndexResults* in *measResultLastServCell* to include all the available measurement quantities of the source PCell (in case HO failure) or PCell (in case RLF), ordered such that the highest CSI-RS RSRP is listed first if CSI-RS RSRP measurement results are available, otherwise the highest CSI-RS RSRQ is listed first if CSI-RS RSRQ measurement results are available, otherwise the highest CSI-RS SINR is listed first, based on the available CSI-RS based measurements collected up to the moment the UE detected failure; |

1> set the *ssbRLMConfigBitmap* and/or *csi-rsRLMConfigBitmap* in *measResultLastServCell* to include the radio link monitoring configuration of the source PCell(in case HO failure) or PCell (in case RLF);
1> for each of the configured *measObjectNR* in which measurements are available:
   ** 2> if the SS/PBCH block-based measurement quantities are available:
      **** 3> set the *measResultListNR* in *measResultNeighCells* to include all the available measurement quantities of the best measured cells, other than the source PCell(in case HO failure) or PCell (in case RLF), ordered such that the cell with highest SS/PBCH block RSRP is listed first if SS/PBCH block RSRP measurement results are available, otherwise the cell with highest SS/PBCH block RSRQ is listed first if SS/PBCH block RSRQ measurement results are available, otherwise the cell with highest SS/PBCH block SINR is listed first, based on the available SS/PBCH block based measurements collected up to the moment the UE detected failure;
         ****** 4> for each neighbour cell included, include the optional fields that are available;
   ** 2> if the CSI-RS-based measurement quantities are available:
      **** 3> set the *measResultListNR* in *measResultNeighCells* to include all the available measurement quantities of the best measured cells, other than the source PCell, ordered such that the cell with highest CSI-RS RSRP is listed first if CSI-RS RSRP measurement results are available, otherwise the cell with highest CSI-RS RSRQ is listed first if CSI-RS RSRQ measurement results are available, otherwise the cell with highest CSI-RS SINR is listed first, based on the available CSI-RS based measurements collected up to the moment the UE detected radio link failure;
         ****** 4> for each neighbour cell included, include the optional fields that are available;
   ** 2> for each of the configured EUTRA frequencies in which measurements are available;
      **** 3> set the *measResultListEUTRA* in *measResultNeighCells* to include the best measured cells ordered such that the cell with highest RSRP is listed first if RSRP measurement results are available, otherwise the cell with highest RSRQ is listed first, and based on measurements collected up to the moment the UE detected failure;
         ****** 4> for each neighbour cell included, include the optional fields that are available;
            NOTE 1: The measured quantities are filtered by the L3 filter as configured in the mobility measurement configuration. The measurements are based on the time domain measurement resource restriction, if configured. Blacklisted cells are not required to be reported.
1> set the *c-RNTI* to the C-RNTI used in the source PCell(in case HO failure) or PCell (in case RLF);
1> if the failure is detected due to reconfiguration with sync failure as described in 5.3.5.8.3, set the fields in *VarRLF-report* as follows:
   ** 2> set the *connectionFailureType* to *hof*;
   ** 2> if last *RRCReconfiguration* message including *reconfigurationWithSync* concerned a failed intra-RAT handover (NR to NR):
      **** 3> set the *nrFailedPCellId* in *failedPCellId* to the global cell identity and tracking area code, if available, and otherwise to the physical cell identity and carrier frequency of the target PCell of the failed handover;
   ** 2> else if last *RRCConnectionReconfiguration* message including *MobilityFromNRCommand* concerned a failed inter-RAT handover from NR to E-UTRA and if the UE supports Radio Link Failure Report for Inter-RAT MRO (NR to EUTRA):
      **** 3> set the *eutraFailedPCellld* in *failedPCellId* to the global cell identity and tracking area code, if available, and otherwise to the physical cell identity and carrier frequency of the target PCell of the failed handover;
   ** 2> include *nrPreviousCell* in *previousPCellld* and set it to the global cell identity and tracking area code of the PCell where the last *RRCReconfiguration* message including *reconfigurationWithSync* was received;
   ** 2> set the *timeConnFailure* to the elapsed time since reception of the last *RRCReconfiguration* message including the *reconfigurationWithSync*;
1> else if the failure is detected due to radio link failure as described in 5.3.10.3, set the fields in *VarRLF-report* as follows:
   ** 2> set the *connectionFailureType* to *rlf;*
   ** 2> set the *rlf-Cause* to the trigger for detecting radio link failure in accordance with clause 5.3.10.4;
   ** 2> set the *nrFailedPCellld* in *failedPCellId* to the global cell identity and the tracking area code, if available, and otherwise to the physical cell identity and carrier frequency of the PCell where radio link failure is detected;
   ** 2> if an *RRCReconfiguration* message including the *reconfigurationWithSync* was received before the connection failure:
      **** 3> if the last *RRCReconfiguration* message including the *reconfigurationWithSync* concerned an intra NR handover:
         ****** 4> include the *nrPreviousCell* in *previousPCellld* and set it to the global cell identity and the tracking area code of the PCell where the last *RRCReconfiguration* message including *reconfigurationWithSync* was received;
         ****** 4> set the *timeConnFailure* to the elapsed time since reception of the last *RRCReconfiguration* message including the *reconfigurationWithSync;*
      **** 3> else if the last *RRCReconfiguration* message including the *reconfigurationWithSync* concerned a handover to NR from E-UTRA and if the UE supports Radio Link Failure Report for Inter-RAT MRO:
         ****** 4> include the *eutraPreviousCell* in *previousPCellId* and set it to the global cell identity and the tracking area code of the E-UTRA PCell where the last *RRCReconfiguration* message including *reconfigurationWithSync* was received embedded in E-UTRA RRC message *MobilityFromEUTRACommand* message as specified in TS 36.331 clause 5.4.3.3;
         ****** 4> set the *timeConnFailure* to the elapsed time since reception of the last *RRCReconfiguration* message including the *reconfigurationWithSync* embedded in E-UTRA RRC message *MobilityFromEUTRACommand* message as specified in TS 36.331 clause 5.4.3.3;
1> if *connectionfailureType* is *rlf* and the *rlf-Cause* is set to *randomAccessProblem* or *beamFailureRecoveryFailure*; or
1> if *connectionfailureType* is *hof*:
   ** 2> set the *ra-InformationCommon* to include the random-access related information as described in subclause 5.7.10.5;
1> if location information is available, set the content of *locationInfo* as follows:
   ** 2> if available, set the *commonLocationInfo* to include the detailed location information;
   ** 2> if available, set the *bt-LocationInfo* in *locationInfo* to include the Bluetooth measurement results, in order of decreasing RSSI for Bluetooth beacons;
   ** 2> if available, set the *wlan-LocationInfo* in *locationInfo* to include the WLAN measurement results, in order of decreasing RSSI for WLAN APs;
   ** 2> if available, set the *sensor-LocationInfo* in *locationInfo* to include the sensor measurement results;

In operation 11-20, the UE may initiate an RRC connection re-establishment procedure. Upon initiation of an RRC connection re-establishment procedure, at least the following procedure may be performed.
- Timer T311 may be driven.
- The cell selection procedure may be performed following the cell selection procedure as specified in TS 38.304.

When a suitable NR cell is selected in operation 11-20, the UE may stop the driven timer T311. According to TS 38.304, the definition of a suitable NR cell is as follows.

### suitable cell:

For UE not operating in SNPN Access Mode, a cell is considered as suitable if the following conditions are fulfilled:
- The cell is part of either the selected PLMN or the registered PLMN or PLMN of the Equivalent PLMN list, and for that PLMN either:
   ** - The PLMN-ID of that PLMN is broadcast by the cell with no associated CAG-IDs and CAG-only indication in the UE for that PLMN (TS 23.501) is absent or false;
   ** - Allowed CAG list in the UE for that PLMN (TS 23.501) includes a CAG-ID broadcast by the cell for that PLMN;
- The cell selection criteria are fulfilled, see clause 5.2.3.2.

According to the latest information provided by NAS:
- The cell is not barred, see clause 5.3.1;
- The cell is part of at least one TA that is not part of the list of "Forbidden Tracking Areas" (TS 22.261), which belongs to a PLMN that fulfils the first bullet above.

For UE operating in SNPN Access Mode, a cell is considered as suitable if the following conditions are fulfilled:
- The cell is part of either the selected SNPN or the registered SNPN of the UE;
- The cell selection criteria are fulfilled, see clause 5.2.3.2;

According to the latest information provided by NAS:
- The cell is not barred, see clause 5.3.1;
   ** - The cell is part of at least one TA that is not part of the list of "Forbidden Tracking Areas" which belongs to either the selected SNPN or the registered SNPN of the UE.

In operation 11-25, the UE may drive the timer T301 and may transmit an RRC connection reestablishment request message (RRCReestablishmentRequest) to the NR base station.

In operation 11-30, the UE may receive an RRC connection reestablishment message (RRCReestablishment) from the NR base station.

In operation 11-35, the UE may transmit an RRC connection reestablishment complete message (RRCReestablishmentComplete) to the NR base station. The UE may accommodate an rlf-InfoAvailable indicator in the RRC connection reestablishment completion message when the following conditions are satisfied.
** 2> if the UE has radio link failure or handover failure information available in VarRLF-Report of TS 36.331 and if the UE is capable of cross-RAT RLF reporting and if the RPLMN is included in plmn-IdentityList stored in VarRLF-Report of TS 36.331:

For reference, the above operation may be equally applied to the RRCSetupComplete message or the RRCResumeComplete message.

In operation 11-40, the UE may receive a UEInformationRequest message from the NR base station. In the UEInformationRequest message, rlf-ReportReq may be set to true.

In operation 11-45, the UE may transmit a UEInformationResponse message to the NR base station. The UE may include rlf-Report in the UEInformationResponse message when the following conditions are satisfied.
1> if rlf-ReportReq is set to true:
   ** 2> if the UE has radio link failure information or handover failure information available in VarRLF-Report and if the RPLMN is included in plmn-IdentityList stored in VarRLF-Report:
      If the above condition is satisfied, in operation 11-45, the UE may include the following information in the UEInformationResponse message and transmit the message to the NR base station.
      **** 3> set *timeSinceFailure* in *VarRLF-Report* to the time that elapsed since the last radio link or handover failure in NR;
      **** 3> set the *rlf-Report* in the UEInformationResponse message to the value of *rlf-Report* in *VarRLF-Report*;
      **** 3> discard the *rlf-Report* from *VarRLF-Report* upon successful delivery of the UEInformationResponse message confirmed by lower layers;

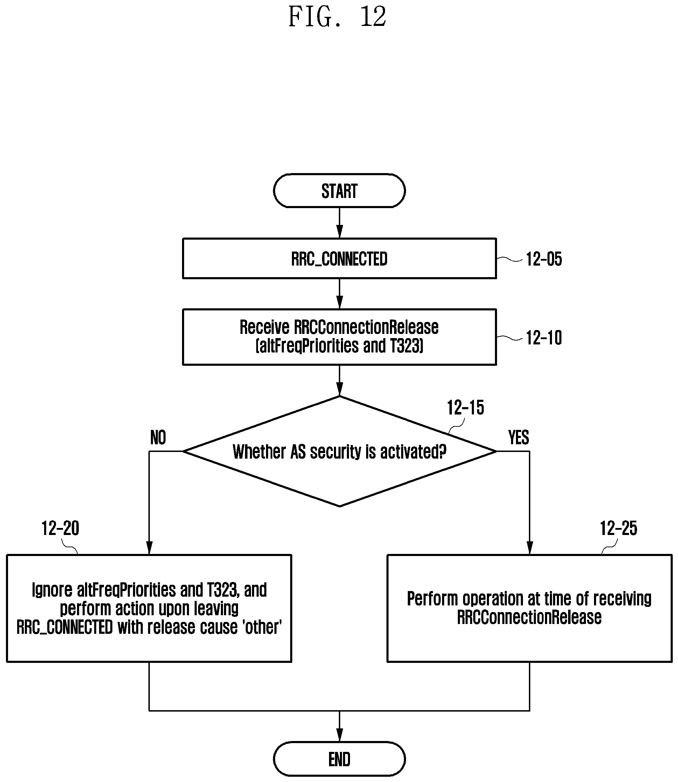

FIG. 12 is a flowchart illustrating a UE operation when an RRCConnectionRelease message is received from an LTE base station in a state in which AS security is not activated according to an embodiment of the disclosure.

Referring to FIG. 12, a UE may be in an RRC connected mode (RRC_CONNECTED) by establishing an RRC connection with an LTE base station (operation 12-05).

In operation 12-10, the UE may receive an RRCConnectionRelease message from the LTE base station. The RRCConnectionRelease message may include altFreqPriorities. Additionally, the RRCConnectionRelease message may include a timer T323.

In operation 12-15, the UE may determine whether AS security is activated.

In case that the AS security of the UE has not been activated in operation 12-15, the UE may ignore altFreqPriorities and T323, which are included in the RRCConnectionRelease message received in operation 12-10, in operation 12-20 (if AS security has not been activated, ignore the altFreqPriorities and T323, if included in RRCConnectionRelease). In addition, when the altFreqPriorities and T323 are ignored, the UE may perform actions upon leaving RRC_CONNECTED as specified in 5.3.12, with release cause 'other', upon which the procedure ends. That is, the following operations may be performed.

Upon leaving RRC_CONNECTED or RRC_INACTIVE, the UE shall:
1> reset MAC;
1> if leaving RRC_INACTIVE was not triggered by the reception of *RRCConnectionRelease* including *idleModeMobilityControlInfo* or *altFreqPriorities*:
   ** 2> stop the timer T320 and T323, if running;
   ** 2> if stored, discard the cell reselection priority information provided by the *idleModeMobilityControlInfo*;
   ** 2> if stored, discard the *altFreqPriorities* provided by the *RRCConnectionRelease;*
1> if entering RRC_IDLE was triggered by reception of the *RRCConnectionRelease* message including a waitTime:
   ** 2> start timer T302, with the timer value set according to the *waitTime*;
   ** 2> inform the upper layer that access barring is applicable for all access categories except categories '0' and '2';
1> else if T302 is running:
   ** 2> stop timer T302;
   ** 2> if the UE is connected to 5GC:
      **** 3> perform the actions as specified in 5.3.16.4;
1> if T309 is running:
   ** 2> stop timer T309 for all access categories;
   ** 2> perform the actions as specified in 5.3.16.4.
1> stop all timers that are running except T302, T320, T322, T323, T325, T330, T331;
1> release *crs-ChEstMPDCCH-ConfigDedicated,* if configured;
1> if leaving RRC_CONNECTED was triggered by suspension of the RRC:
   ** 2> re-establish RLC entities for all SRBs and DRBs, including RBs configured with NR PDCP;
   ** 2> store the UE AS Context including the current RRC configuration, the current security context, the PDCP state including ROHC state, C-RNTI used in the source PCell, the *cellldentity* and the physical cell identity of the source PCell, and the *spCellConfigCommon* within *ReconfigurationWithSync* of the PSCell (if configured);
   ** 2> store the following information provided by E-UTRAN:
      **** 3> the *resumeIdentity*;
      **** 3> the *nextHopChainingCount,* if present. Otherwise discard any stored *nextHopChainingCount* that does not correspond to stored key K_{RRCint};
      **** 3> the *drb-ContinueROHC,* if present. Otherwise discard any stored *drb-ContinueROHC;*
   ** 2> suspend all SRB(s) and DRB(s), including RBs configured with NR PDCP, except SRB0;
   ** 2> if the UE connected to 5GC is a BL UE or UE in CE, indicate PDCP suspend to lower layers of all DRBs;
   ** 2> if the UE is connected to 5GC:
      **** 3> indicate the idle suspension of the RRC connection to upper layers;
   ** 2> else:
      **** 3> indicate the suspension of the RRC connection to upper layers;
   ** 2> configure lower layers to suspend integrity protection and ciphering;
      NOTE 1: Except when resuming an RRC connection after early security reactivation in accordance with conditions in 5.3.3.18, ciphering is not applied for the subsequent *RRCConnectionResume* message used to resume the connection and an integrity check is performed by lower layers, but merely upon request from RRC.
1> else:
   ** 2> upon leaving RRC_INACTIVE:
      **** 3> discard the UE Inactive AS context;
      **** 3> discard the K_{eNB}, the K_{RRCenc} key, the K_{RRCint} and the K_{UPenc} key;
   ** 2> release *frc-InactiveConfig,* if configured;
   ** 2> remove all entries within *VarConditionalReconfiguration,* if any;
   ** 2> for each *measld,* that is part of the current UE configuration in *VarMeasConfig,* if the associated *reportConfig* has *condReconfigurationTriggerEUTRA* configured:
      **** 3> remove the entry with the matching *reportConfigId* from the *reportConfigList* within the *VarMeasConfig;*
      **** 3> if the associated *measObjectId* is only associated with *condReconfigurationTriggerEUTRA:*
         ****** 4> remove the entry with the matching *measObjectId* from the *measObjectList* within the *VarMeasConfig;*
      **** 3> remove the entry with the matching *measId* from the *measldList* within the *VarMeasConfig;*
   ** 2> release all radio resources, including release of the MAC configuration, the RLC entity and the associated PDCP entity and SDAP (if any) for all established RBs, except for the following:
      ***** - pur-Config,* if stored;
   ** 2> indicate the release of the RRC connection to upper layers together with the release cause;
1> if leaving RRC_CONNECTED was triggered neither by reception of the *MobilityFromEUTRACommand* message nor by selecting an inter-RAT cell while T311 was running; or
1> if leaving RRC_INACTIVE was not triggered by the inter-RAT cell reselection:
   ** 2> if timer T350 is configured:
      **** 3> start timer T350;
      **** 3> apply *rclwi-Configuration* if configured, otherwise apply the *wlan-Id-List* corresponding to the RPLMN included in *SystemInformationBlockType17*;
   ** 2> else:
      **** 3> release the *wlan-OffloadConfigDedicated,* if received;
      **** 3> if the *wlan-OffloadConfigCommon* corresponding to the RPLMN is broadcast by the cell:
         ****** 4> apply the *wlan-OffloadConfigCommon* corresponding to the RPLMN included in *SystemInformationBlockType17*;
         ****** 4> apply *steerToWLAN* if configured, otherwise apply the *wlan-Id-List* corresponding to the RPLMN included in *SystemInformationBlockType17*;
   ** 2> enter RRC_IDLE and perform procedures as specified in TS 36.304, clause 5.2.7;
1> else:
   ** 2> release the *wlan-OffloadConfigDedicated,* if received;
      NOTE 2: BL UEs or UEs in CE verifies validity of SI when released to RRC_IDLE.
1> release the LWA configuration, if configured, as described in 5.6.14.3;
1> release the LWIP configuration, if configured, as described in 5.6.17.3;

If the AS security of the UE has been activated in operation 12-15, the UE may continue to perform operations to be performed at the time of receiving RRCConnectionRelease, in operation 12-25. The operations are as follows.
1> if the *RRCConnectionRelease* message includes *redirectedCarrierInfo* indicating redirection to *eutra* and if UE is connected to 5GC:
   ** 2> if *cn-Type* is included:
      **** 3> after the cell selection, indicate the available CN Type(s) and the received *cn-Type* to upper layers;
         NOTE 1: Handling the case if the E-UTRA cell selected after the redirection does not support the core network type specified by the *en-Type,* is up to UE implementation.
1> if the *RRCConnectionRelease* message includes the *idleModeMobilityControlInfo*:
   ** 2> store the cell reselection priority information provided by the *idleModeMobilityControlInfo*;
   ** 2> if the *t320* is included:
      **** 3> start timer T320, with the timer value set according to the value of *t320;*
1> else if the *RRCConnectionRelease* message includes the *altFreqPriorities:*
   ** 2> store the received *altFreqPriorities;*
   ** 2> for E-UTRA frequency, apply the alternative cell reselection priority information broadcast in the system information if available, otherwise apply the cell reselection priority broadcast in the system information;
   ** 2> for inter-RAT frequency, apply the cell reselection priority broadcast in the system information;
   ** 2> if the *t323* is included:
      **** 3> start timer T323, with the timer value set according to the value of *t323;*
1> else:
   ** 2> apply the cell reselection priority information broadcast in the system information;
1> if the *RRCConnectionRelease* message includes the *releaseMeasldleConfig:*
   ** 2> if T331 timer is running:
      **** 3> stop T331 timer;
      **** 3> perform the actions as specified in 5.6.20.3;
1> if the *RRCConnectionRelease* message includes the *measldleConfig:*
   ** 2> clear *VarMeasIdleConfig* and *VarMeasldleReport;*
   ** 2> store the received *measIdleDuration* in *VarMeasIdleConfig;*
   ** 2> start or restart T331 with the value of *measIdleDuration*;
   ** 2> if the *measIdleConfig* contains *measldleCarrierListEUTRA:*
      **** 3> store the received *measldleCarrierListEUTRA* in *VarMeasIdleConfig;*
   ** 2> if the *measIdleConfig* contains *measldleCarrierListNR:*
      **** 3> store the received *measldleCarrierListNR* in *VarMeasIdleConfig*;
   **2> if the *measldleConfig* contains *validityAreaList*:
      **** 3> store the received *validityAreaList* in *VarMeasIdleConfig*;
         NOTE 2: If the *measldleConfig* contains neither *measIdleCarrierListEUTRA* nor *measldleCarrierListNR,* UE may receive *measldleCarrierListEUTRA* and/or *measldleCarrierListNR* as specified in 5.6.20.1a.
1> for NB-IoT, if the *RRCConnectionRelease* message includes the *anr - MeasConfig:*
   ** 2> store the received *anr-QualityThreshold* in *VarANR-MeasConfig-NB*;
   ** 2> if the *anr-MeasConfig* contains *anr-CarrierList*:
      **** 3> store the received *anr -CarrierList* in *VarANR-MeasConfig-NB*;
   ** 2> set *plmn-IdentityList* in *VarANR-MeasReport-NB* to include the list of EPLMNs stored by the UE (i.e., includes the RPLMN);
   ** 2> set *servCellIdentity* in *VarANR-MeasReport-NB* to the global cell identity of the Pcell;
   ** 2> start performing ANR measurements as specified in 5.6.24;
1> if the *RRCConnectionRelease* message includes the *pur-Config*:
   ** 2> if *pur-Config* is set to *setup*:
      **** 3> store or replace the PUR configuration provided by the *pur-Config*;
      **** *3>* if *pur-TimeAlignmentTimer* is included in the received *pur*-*Config*:
         ****** 4> configure lower layers in accordance with *pur-TimeAlignmentTimer;*
      **** 3> else:
         ****** 4> *if pur-TimeAlignmentTimer* is configured, indicate to lower layers that *pur-TimeAlignmentTimer* is released;
      **** 3> start maintenance of PUR occasions as specified in 5.3.3.20;
   ** 2> else:
      **** 3> if *pur-TimeAlignmentTimer* is configured, indicate to lower layers that *pur-TimeAlignmentTimer* is released;
      **** 3> release *pur-Config,* if configured;
      **** 3> discard previously stored *pur-Config*;
1> for NB-IoT, if the *RRCConnectionRelease* message includes the *redirectedCarrierInfo*:
   ** 2> if the *redirectedCarrierOffsetDedicated* is included in the *redirectedCarrierInfo:*
      **** 3> store the dedicated offset for the frequency in *redirectedCarrierInfo*;
      **** 3> start timer T322, with the timer value set according to the value of T322 in *redirectedCarrierInfo*;
1> if the *releaseCause* received in the *RRCConnectionRelease* message indicates *loadBalancingTAURequired*:
   ** 2> perform the actions upon leaving RRC_CONNECTED as specified in 5.3.12, with release cause 'load balancing TAU required';
1> else if the *releaseCause* received in the *RRCConnectionRelease* message indicates *cs-FallbackHighPriority*:
   ** 2> perform the actions upon leaving RRC_CONNECTED as specified in 5.3.12, with release cause 'CS Fallback High Priority';
1> else:
   ** 2> if the *extendedWaitTime* is present; and
   ** 2> if the UE supports delay tolerant access or the UE is a NB-IoT UE:
      **** 3> forward the *extendedWaitTime* to upper layers;
   ** 2> if the *extendedWaitTime-CPdata* is present and the NB-IoT UE only supports the Control Plane CIoT EPS optimization:
      **** 3> forward the *extendedWaitTime-CPdata* to upper layers;
   ** 2> if the *releaseCause* received in the *RRCConnectionRelease* message indicates *rrc -Suspend*:
      **** 3> perform the actions upon leaving RRC_CONNECTED as specified in 5.3.12, with release cause 'RRC suspension';
   ** 2> else if *rrc-InactiveConfig* is included:
      **** 3> perform the actions upon entering RRC_INACTIVE as specified in 5.3.8.7;
   ** 2> else:
      **** 3> perform the actions upon leaving RRC_CONNECTED or RRC_INACTIVE as specified in 5.3.12, with release cause 'other';

A UE according to an embodiment of the disclosure proposes to perform a UE operation differently depending on whether AS security is activated, during reception of the RRCConnectionRelease message containing altFreqPriorities and T323. That is, a UE for which AS security is not activated is configured not to perform all the operations to be performed at the time of receiving the RRCConnectionRelease message, but only to perform operations to be performed when leaving the CONNCETED mode. This is for rapid transition to RRC _IDLE without performing any further operation based on the information included in the RRCConnectionRelease message since the AS security is not activated.

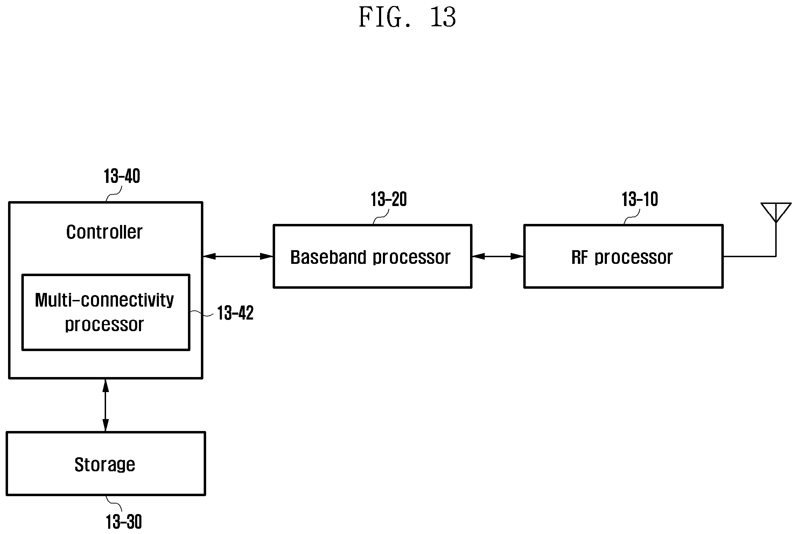

FIG. 13 is a block diagram illustrating an internal structure of a UE according to an embodiment of the disclosure.

Referring to the drawing, the UE may include a radio frequency (RF) processor 13-10, a baseband processor 13-20, a storage 13-30, and a controller 13-40.

The RF processor 13-10 may perform a function for transmitting and receiving a signal through a wireless channel such as band conversion, amplification, and the like of a signal. That is, the RF processor 13-10 may up-convert a baseband signal provided from the baseband processor 13-20 into an RF band signal and may transmit the RF band signal through an antenna, and may down-convert the RF band signal received through the antenna into a baseband signal. For example, the RF processor 13-10 may include a transmission filter, a reception filter, an amplifier, a mixer, an oscillator, a digital to analog convertor (DAC), an analog to digital convertor (ADC), and the like. In the drawing, only one antenna is shown, but the UE may be provided with multiple antennas. In addition, the RF processor 13-10 may include multiple RF chains. In addition, the RF processor 13-10 may perform beamforming. For the beamforming, the RF processor 13-10 may adjust the phase and magnitude of each of signals transmitted and received through multiple antennas or antenna elements. In addition, the RF processor may perform MIMO and may receive multiple layers when performing the MIMO operation.

The baseband processor 13-20 may perform a function of conversion between a baseband signal and a bit string according to a physical layer standard of the system. For example, during data transmission, the baseband processor 13-20 generates complex symbols by encoding and modulating a transmission bit string. In addition, during data reception, the baseband processor 13-20 may reconstruct the received bit string by demodulating and decoding a baseband signal provided from the RF processor 13-10. For example, according to an orthogonal frequency division multiplexing (OFDM) scheme, during data transmission, the baseband processor 13-20 may generate complex symbols by encoding and modulating a transmission bit string, may map the complex symbols to subcarriers, and may then configure OFDM symbols through an inverse fast Fourier transform (IFFT) operation and cyclic prefix (CP) insertion. In addition, during data reception, the baseband processor 13-20 may divide the baseband signal provided from the RF processor 13-10 into units of OFDM symbols, may reconstruct the signals mapped to the subcarriers through a fast Fourier transform (FFT) operation, and may then reconstruct the received bit string through demodulation and decoding.

The baseband processor 13-20 and the RF processor 13-10 may transmit or receive signals as described above. Accordingly, the baseband processor 13-20 or the RF processor 13-10 may be referred to as a transmitter, a receiver, a transceiver, or a communication unit. Further, at least one of the baseband processor 13-20 and the RF processor 13-10 may include multiple communication modules to support multiple different radio access technologies. In addition, at least one of the baseband processor 13-20 and the RF processor 13-10 may include different communication modules to process signals of different frequency bands. For example, the different radio access technologies may include a wireless LAN (e.g., IEEE 802.11), a cellular network (e.g. LTE), and the like. In addition, the different frequency bands may include a super high frequency (SHF) (e.g., 2.NRHz or NRhz) band and a millimeter wave (e.g., 60 GHz) band.

The storage 13-30 may store data such as a basic program, an application program, and configuration information for the operation of the UE. In particular, the storage 13-30 may store information related to a second access node configured to perform wireless communication using a second wireless access technology. In addition, the storage 13-30 may provide stored data according to a request from the controller 13-40.

The controller 13-40 may control overall operations of the UE. For example, the controller 13-40 may transmit or receive signals through the baseband processor 13-20 or the RF processor 13-10. In addition, the controller 13-40 may record and read data in the storage 13-30. To this end, the controller 13-40 may include at least one processor. For example, the controller 13-40 may include a communication processor (CP) for performing control for communication and an application processor (AP) for controlling an upper layer such as an application program. In addition, the controller 13-40 may further include a multi-connectivity processor 13-42 configured to support multiple connectivity.

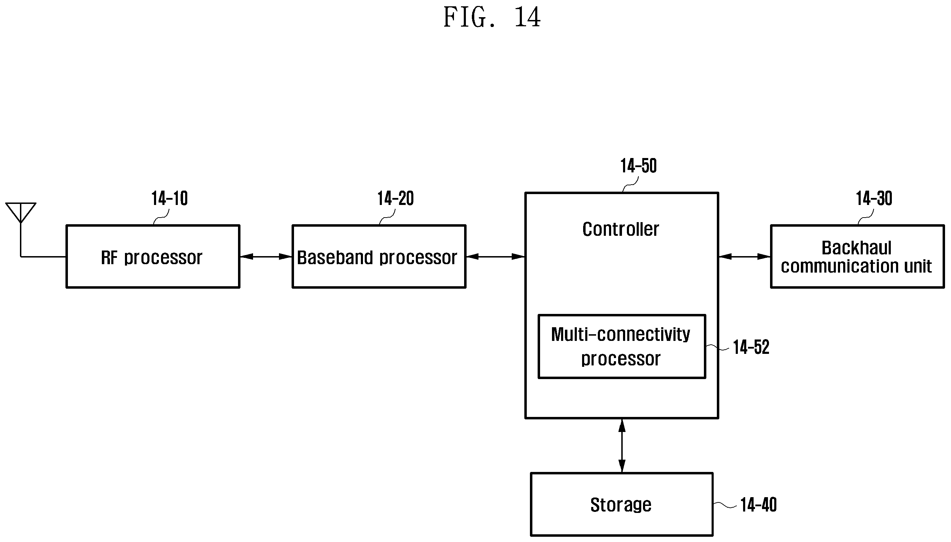

FIG. 14 is a block diagram illustrating the configuration of an NR base station according to an embodiment of the disclosure.

As shown in the drawing, the base station may include an RF processor 14-10, a baseband processor 14-20, a backhaul communication unit 14-30, a storage 14-40, and a controller 14-50.

The RF processor 14-10 may perform a function for transmitting or receiving a signal through a wireless channel such as band conversion, amplification, and the like of a signal. That is, the RF processor 14-10 may up-convert a baseband signal provided from the baseband processor 14-20 into an RF band signal to transmit the RF band signal through an antenna, and may down-convert the RF band signal received through the antenna into a baseband signal. For example, the RF processor 14-10 may include a transmission filter, a reception filter, an amplifier, a mixer, an oscillator, a DAC, an ADC, and the like. In the drawing, only one antenna is shown, but the first access node may be provided with multiple antennas. In addition, the RF processor 14-10 may include multiple RF chains. In addition, the RF processor 14-10 may perform beamforming. For the beamforming, the RF processor 14-10 may adjust the phase and magnitude of each of signals transmitted and received through multiple antennas or antenna elements. The RF processor may perform a downlink MIMO operation by transmitting one or more layers.

The baseband processor 14-20 may perform a function of conversion between a baseband signal and a bit string according to a physical layer standard of a first radio access technology. For example, during data transmission, the baseband processor 14-20 may generate complex symbols by encoding and modulating a transmission bit string. In addition, during data reception, the baseband processor 14-20 may reconstruct a received bit string by demodulating and decoding the baseband signal provided from the RF processor 14-10. For example, according to an OFDM scheme, during data transmission, the baseband processor 14-20 may generate complex symbols by encoding and modulating a transmission bit string, may map the complex symbols to subcarriers, and may then configure OFDM symbols through IFFT operation and CP insertion. In addition, during data reception, the baseband processor 14-20 may divide the baseband signal provided from the RF processor 14-10 in units of OFDM symbols, may reconstruct signals mapped to the subcarriers through the FFT operation, and may then reconstruct the received bit string through demodulation and decoding. The baseband processor 14-20 or the RF processor 14-10 may transmit or receive signals as described above. Accordingly, the baseband processor 14-20 or the RF processor 14-10 may be referred to as a transmitter, a receiver, a transceiver, a communication unit, or a wireless communication unit.

The backhaul communication unit 14-30 may provide an interface for communicating with other nodes in a network. In other words, the backhaul communication unit 14-30 converts a bit string, which is transmitted from the main base station to another node, for example, an auxiliary base station, a core network, etc., into a physical signal, and converts a physical signal received from the other node into a bit string.

The storage 14-40 may store data such as a basic program, an application program, and configuration information for the operation of a base station. In particular, the storage 14-40 may store information on a bearer assigned to a connected UE, a measurement result reported from the connected UE, and the like. Further, the storage 14-40 may store information that is a criterion for determining whether to provide or terminate multiple connections to the UE. In addition, the storage 14-40 may provide stored data according to a request from the controller 14-50.

The controller 14-50 may control overall operations of the main base station. For example, the controller 14-50 may transmit or receive signals through the baseband processor 14-20 or the RF processor 14-10 or through the backhaul communication unit 14-30. In addition, the controller 14-50 may record and read data in the storage 14-40. To this end, the controller 14-50 may include at least one processor. In addition, the controller 14-50 may further include a multi-connectivity processor 14-52 configured to support multiple connectivity.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims.

## Claims

1. A method performed by a terminal in a wireless communication system, the method comprising:
identifying a failure of connection with a cell;
storing cell level measurement information for the cell and beam level measurement information for beams associated with the cell;
transmitting, to a base station, a first message related to a radio resource control, RRC, reestablishment procedure, the first message including an indicator indicating that reporting of information related to the connection failure is available;
receiving, from the base station, a second message requesting the information related to the connection failure; and
in response to the second message, transmitting, to the base station, a third message including the stored cell level measurement information and the stored beam level measurement information,
wherein in case that reference signal received power, RSRP, values for reference signals are available, a highest of the RSRP values is listed first in the beam level measurement information.

2. The method of claim 1, wherein:
in case that the RSRP values are not available and reference signal received quality, RSRQ, values for the reference signals are available, a highest of the RSRQ values is listed first in the beam level measurement information, and
in case that both the RSRP values and the RSRQ values are not available and signal to noise and interference ratio, SINR, values for the reference signals are available, a highest of the SINR values is listed first in the beam level measurement information.

3. The method of claim 1, wherein index information of each of the reference signals is stored in the beam level measurement information.

4. The method of claim 1, wherein each of the reference signals is a synchronization signal block, SSB, or a channel state information-reference signal, CSI-RS.

5. A method performed by a base station in a wireless communication system, the method comprising:
receiving, from a terminal, a first message related to a radio resource control, RRC, reestablishment procedure, the first message including an indicator indicating that reporting of information related to a connection failure is available;
transmitting, to the terminal, a second message requesting the information related to the connection failure; and
in response to the second message, receiving, from the terminal, a third message including cell level measurement information for a cell on which the connection failure is identified and beam level measurement information for beams associated with the cell,
wherein in case that reference signal received power, RSRP, values for reference signals are available, a highest of the RSRP values is listed first in the beam level measurement information.

6. The method of claim 5, wherein:
in case that the RSRP values are not available and reference signal received quality, RSRQ, values for the reference signals are available, a highest of the RSRQ values is listed first in the beam level measurement information, and
in case that both the RSRP values and the RSRQ values are not available and signal to noise and interference ratio, SINR, values for the reference signals are available, a highest of the SINR values is listed first in the beam level measurement information.

7. The method of claim 5, wherein index information of each of the reference signals is included in the beam level measurement information, and
wherein each of the reference signals is a synchronization signal block, SSB, or a channel state information-reference signal, CSI-RS.

8. A terminal in a wireless communication system, the terminal comprising:
a transceiver (13-10, 13-20); and
a controller (13-40) configured to:
identify a failure of connection with acell,
store cell level measurement information for the cell and beam level measurement information for beams associated with the cell,
transmit, to a base station via the transceiver, a first message related to a radio resource control, RRC, reestablishment procedure, the first message including an indicator indicating that reporting of information related to the connection failure is available,
receive, from the base station via the transceiver, a second message requesting the information related to the connection failure, and
in response to the second message, transmit, to the base station via the transceiver, a third message including the stored cell level measurement information and the stored beam level measurement information,
wherein in case that reference signal received power, RSRP, values for reference signals are available, a highest of the RSRP values is listed first in the beam level measurement information.

9. The terminal of claim 8, wherein:
in case that the RSRP values are not available and reference signal received quality, RSRQ, values for the reference signals are available, a highest of the RSRQ values is listed first in the beam level measurement information, and
in case that both the RSRP values and the RSRQ values are not available and signal to noise and interference ratio, SINR, values for the reference signals are available, a highest of the SINR values is listed first in the beam level measurement information.

10. The terminal of claim 8, wherein index information of each of the reference signals is stored in the beam level measurement information.

11. The terminal of claim 8, wherein each of the reference signals is a synchronization signal block, SSB, or a channel state information-reference signal, CSI-RS.

12. A base station in a wireless communication system, the base station comprising:
a transceiver (14-10, 14-20); and
a controller (14-50) configured to:
receive, from a terminal via the transceiver, a first message related to a radio resource control, RRC, reestablishment procedure, the first message including an indicator indicating that reporting of information related to a connection failure is available,
transmit, to the terminal via the transceiver, a second message requesting the information related to the connection failure, and
in response to the second message, receive, from the terminal via the transceiver, a third message including cell level measurement information for a cell on which the connection failure is identified and beam level measurement information for beams associated with the cell,
wherein in case that reference signal received power, RSRP, values for reference signals are available, a highest of the RSRP values is listed first in the beam level measurement information.

13. The base station of claim 12, wherein:
in case that the RSRP values are not available and reference signal received quality, RSRQ, values for the reference signals are available, a highest of the RSRQ values is listed first in the beam level measurement information, and
in case that both the RSRP values and the RSRQ values are not available and signal to noise and interference ratio, SINR, values for the reference signals are available, a highest of the SINR values is listed first in the beam level measurement information.

14. The base station of claim 12, wherein index information of each of the reference signals is included in the beam level measurement information.

15. The base station of claim 12, wherein each of the reference signals is a synchronization signal block, SSB, or a channel state information-reference signal, CSI-RS.

## Patentansprüche

1. Verfahren, das von einem Endgerät in einem drahtlosen Kommunikationssystem durchgeführt wird, wobei das Verfahren Folgendes umfasst:
Identifizieren eines Fehlers bei der Verbindung mit einer Zelle;
Speichern von Messinformationen auf Zellebene für die Zelle und von Messinformationen auf Strahlebene für mit der Zelle assoziierte Strahlen;
Übertragen, an eine Basisstation, einer ersten Nachricht, die sich auf eine Funkressourcensteuerungs-, RRC, -Wiederherstellungsprozedur bezieht, wobei die erste Nachricht einen Indikator enthält, der angibt, dass eine Meldung von Informationen, die sich auf den Fehler bei der Verbindung beziehen, verfügbar ist;
Empfangen, von der Basisstation, einer zweiten Nachricht, in der die Informationen, die sich auf den Fehler bei der Verbindung beziehen, angefordert werden; und
als Reaktion auf die zweite Nachricht, Übertragen, an die Basisstation, einer dritten Nachricht, die die gespeicherten Messinformationen auf Zellebene und die gespeicherten Messinformationen auf Strahlebene beinhaltet,
wobei, falls Referenzsignal-Empfangsleistungs-, RSRP, -Werte für Referenzsignale verfügbar sind, der höchste der RSRP-Werte in den Messinformationen auf Strahlebene zuerst aufgeführt ist.

2. Verfahren nach Anspruch 1, wobei:
falls die RSRP-Werte nicht verfügbar sind und Referenzsignal-Empfangsqualitäts-, RSRQ, -Werte für die Referenzsignale verfügbar sind, der höchste der RSRQ-Werte in den Messinformationen auf Strahlebene zuerst aufgeführt ist, und
falls sowohl die RSRP-Werte als auch die RSRQ-Werte nicht verfügbar sind und Signal-Rausch-Interferenz-Verhältnis-, SINR, -Werte für die Referenzsignale verfügbar sind, der höchste der SINR-Werte in den Messinformationen auf Strahlebene zuerst aufgeführt ist.

3. Verfahren nach Anspruch 1, wobei Indexinformationen jedes der Referenzsignale in den Messinformationen auf Strahlebene gespeichert sind.

4. Verfahren nach Anspruch 1, wobei jedes der Referenzsignale ein Synchronisationssignalblock, SSB, oder ein Kanalzustandsinformations-Referenzsignal, CSI-RS, ist.

5. Verfahren, das von einer Basisstation in einem drahtlosen Kommunikationssystem durchgeführt wird, wobei das Verfahren Folgendes umfasst:
Empfangen, von einem Endgerät, einer ersten Nachricht, die sich auf eine Funkressourcensteuerungs-, RRC, -Wiederherstellungsprozedur bezieht, wobei die erste Nachricht einen Indikator enthält, der angibt, dass eine Meldung von Informationen, die sich auf einen Fehler bei einer Verbindung beziehen, verfügbar ist;
Übertragen, an das Endgerät, einer zweiten Nachricht, in der die Informationen, die sich auf den Fehler bei der Verbindung beziehen, angefordert werden; und
als Reaktion auf die zweite Nachricht, Empfangen, von dem Endgerät, einer dritten Nachricht, die Messinformationen auf Zellebene für eine Zelle, in der der Fehler bei der Verbindung identifiziert wurde, und Messinformationen auf Strahlebene für mit der Zelle assoziierte Strahlen enthält,
wobei, falls Referenzsignal-Empfangsleistungs-, RSRP, -Werte für Referenzsignale verfügbar sind, der höchste der RSRP-Werte in den Messinformationen auf Strahlebene zuerst aufgeführt ist.

6. Verfahren nach Anspruch 5, wobei:
falls die RSRP-Werte nicht verfügbar sind und Referenzsignal-Empfangsqualitäts-, RSRQ, -Werte für die Referenzsignale verfügbar sind, der höchste der RSRQ-Werte in den Messinformationen auf Strahlebene zuerst aufgeführt ist, und
falls sowohl die RSRP-Werte als auch die RSRQ-Werte nicht verfügbar sind und Signal-Rausch-Interferenz-Verhältnis-, SINR, -Werte für die Referenzsignale verfügbar sind, der höchste der SINR-Werte in den Messinformationen auf Strahlebene zuerst aufgeführt ist.

7. Verfahren nach Anspruch 5, wobei Indexinformationen jedes der Referenzsignale in den Messinformationen auf Strahlebene enthalten sind, und
wobei jedes der Referenzsignale ein Synchronisationssignalblock, SSB, oder ein Kanalzustandsinformations-Referenzsignal, CSI-RS, ist.

8. Endgerät in einem drahtlosen Kommunikationssystem, wobei das Endgerät Folgendes umfasst:
einen Transceiver (13-10, 13-20); und
eine Steuerung (13-40), die konfiguriert ist zum:
Identifizieren eines Fehlers bei der Verbindung mit einer Zelle,
Speichern von Messinformationen auf Zellebene für die Zelle und von Messinformationen auf Strahlebene für mit der Zelle assoziierte Strahlen,
Übertragen, an eine Basisstation über den Transceiver, einer ersten Nachricht, die sich auf eine Funkressourcensteuerungs-, RRC, -Wiederherstellungsprozedur bezieht, wobei die erste Nachricht einen Indikator enthält, der angibt, dass eine Meldung von Informationen, die sich auf den Fehler bei der Verbindung beziehen, verfügbar ist,
Empfangen, von der Basisstation über den Transceiver, einer zweiten Nachricht, in der die Informationen, die sich auf den Fehler bei der Verbindung beziehen, angefordert werden, und
als Reaktion auf die zweite Nachricht, Übertragen, an die Basisstation über den Transceiver, einer dritten Nachricht, die die gespeicherten Messinformationen auf Zellebene und die gespeicherten Messinformationen auf Strahlebene beinhaltet,
wobei, falls Referenzsignal-Empfangsleistungs-, RSRP, -Werte für Referenzsignale verfügbar sind, der höchste der RSRP-Werte in den Messinformationen auf Strahlebene zuerst aufgeführt ist.

9. Endgerät nach Anspruch 8, wobei:
falls die RSRP-Werte nicht verfügbar sind und Referenzsignal-Empfangsqualitäts-, RSRQ, -Werte für die Referenzsignale verfügbar sind, der höchste der RSRQ-Werte in den Messinformationen auf Strahlebene zuerst aufgeführt ist, und
falls sowohl die RSRP-Werte als auch die RSRQ-Werte nicht verfügbar sind und Signal-Rausch-Interferenz-Verhältnis-, SINR, -Werte für die Referenzsignale verfügbar sind, der höchste der SINR-Werte in den Messinformationen auf Strahlebene zuerst aufgeführt ist.

10. Endgerät nach Anspruch 8, wobei Indexinformationen jedes der Referenzsignale in den Messinformationen auf Strahlebene gespeichert sind.

11. Endgerät nach Anspruch 8, wobei jedes der Referenzsignale ein Synchronisationssignalblock, SSB, oder ein Kanalzustandsinformations-Referenzsignal, CSI-RS, ist.

12. Basisstation in einem drahtlosen Kommunikationssystem, wobei die Basisstation Folgendes umfasst:
einen Transceiver (14-10, 14-20); und
eine Steuerung (14-50), die konfiguriert ist zum:
Empfangen, von einem Endgerät über den Transceiver, einer ersten Nachricht, die sich auf eine Funkressourcensteuerungs-, RRC, -Wiederherstellungsprozedur bezieht, wobei die erste Nachricht einen Indikator enthält, der angibt, dass eine Meldung von Informationen, die sich auf einen Fehler bei einer Verbindung beziehen, verfügbar ist,
Übertragen, an das Endgerät über den Transceiver, einer zweiten Nachricht, in der die Informationen, die sich auf den Fehler bei der Verbindung beziehen, angefordert werden, und
als Reaktion auf die zweite Nachricht, Empfangen, von dem Endgerät über den Transceiver, einer dritten Nachricht, die Messinformationen auf Zellebene für eine Zelle, in der der Fehler bei der Verbindung identifiziert wurde, und Messinformationen auf Strahlebene für mit der Zelle assoziierte Strahlen enthält,
wobei, falls Referenzsignal-Empfangsleistungs-, RSRP, -Werte für Referenzsignale verfügbar sind, der höchste der RSRP-Werte in den Messinformationen auf Strahlebene zuerst aufgeführt ist.

13. Basisstation nach Anspruch 12, wobei:
falls die RSRP-Werte nicht verfügbar sind und Referenzsignal-Empfangsqualitäts-, RSRQ, -Werte für die Referenzsignale verfügbar sind, der höchste der RSRQ-Werte in den Messinformationen auf Strahlebene zuerst aufgeführt ist, und
falls sowohl die RSRP-Werte als auch die RSRQ-Werte nicht verfügbar sind und Signal-Rausch-Interferenz-Verhältnis-, SINR, -Werte für die Referenzsignale verfügbar sind, der höchste der SINR-Werte in den Messinformationen auf Strahlebene zuerst aufgeführt ist.

14. Basisstation nach Anspruch 12, wobei Indexinformationen jedes der Referenzsignale in den Messinformationen auf Strahlebene enthalten sind.

15. Basisstation nach Anspruch 12, wobei jedes der Referenzsignale ein Synchronisationssignalblock, SSB, oder ein Kanalzustandsinformations-Referenzsignal, CSI-RS, ist.

## Revendications

1. Procédé exécuté par un terminal dans un système de communication sans fil, le procédé comprenant :
identifier un échec de connexion avec une cellule ;
stocker les informations de mesure de niveau de cellule pour la cellule et les informations de mesure de niveau de faisceau pour les faisceaux associés à la cellule ;
transmettre, à une station base, un premier message relatif à une procédure de rétablissement de commande de ressources radio, RRC, le premier message comprenant un indicateur indiquant que la communication d'informations relatives à l'échec de connexion est disponible ;
recevoir, de la station de base, un second message demandant les informations relatives à l'échec de connexion ; et
en réponse au second message, transmettre, à la station base, un troisième message comprenant les informations de mesure de niveau de cellule stockées et les informations de mesure de niveau de faisceau stockées,
dans lequel, si des valeurs de puissance reçue de signal de référence, RSRP, sont disponibles pour les signaux de référence, la plus élevée des valeurs RSRP est listée en premier dans les informations de mesure de niveau de faisceau.

2. Procédé de la revendication 1, dans lequel :
dans le cas où les valeurs RSRP ne sont pas disponibles et où les valeurs de qualité de signal reçu de référence, RSRQ, sont disponibles pour les signaux de référence, la plus élevée des valeurs RSRQ est listée en premier dans les informations de mesure de niveau de faisceau, et
dans le cas où les valeurs RSRP et les valeurs RSRQ ne sont pas disponibles et que les valeurs de rapport signal/brouillage et bruit, SINR, pour les signaux de référence sont disponibles, la plus élevée des valeurs SINR est listée en premier dans les informations de mesure de niveau de faisceau.

3. Procédé de la revendication 1, dans lequel l'information d'index de chacun des signaux de référence est stockée dans l'information de mesure de niveau de faisceau.

4. Procédé de la revendication 1, dans lequel chacun des signaux de référence est un bloc de signal de synchronisation, SSB, ou un signal de référence d'informations d'état de canal, CSI-RS.

5. Procédé exécuté par une station de base dans un système de communication sans fil, le procédé comprenant :
recevoir, en provenance d'un terminal, un premier message relatif à une procédure de rétablissement de commande de ressources radio, RRC, le premier message comprenant un indicateur indiquant que la communication d'informations relatives à un échec de connexion est disponible ;
transmettre, au terminal, un second message demandant les informations relatives à l'échec de connexion ; et
en réponse au second message, recevoir, en provenance du terminal, un troisième message comprenant des informations de mesure de niveau de cellule pour une cellule sur laquelle l'échec de connexion est identifié et des informations de mesure de niveau de faisceau pour les faisceaux associés à la cellule,
dans lequel, si des valeurs de puissance reçue de signal de référence, RSRP, sont disponibles pour les signaux de référence, la plus élevée des valeurs RSRP est listée en premier dans les informations de mesure de niveau de faisceau.

6. Procédé de la revendication 5, dans lequel :
dans le cas où les valeurs RSRP ne sont pas disponibles et où les valeurs de qualité de signal reçu de référence, RSRQ, sont disponibles pour les signaux de référence, la plus élevée des valeurs RSRQ est listée en premier dans les informations de mesure de niveau de faisceau, et
dans le cas où les valeurs RSRP et les valeurs RSRQ ne sont pas disponibles et que les valeurs de rapport signal/brouillage et bruit, SINR, pour les signaux de référence sont disponibles, la plus élevée des valeurs SINR est listée en premier dans les informations de mesure de niveau de faisceau.

7. Procédé de la revendication 5, dans lequel l'information d'index de chacun des signaux de référence est incluse dans l'information de mesure de niveau de faisceau, et
dans lequel chacun des signaux de référence est un bloc de signal de synchronisation, SSB, ou un signal de référence d'informations d'état de canal, CSI-RS.

8. Terminal dans un système de communication sans fil, le terminal comprenant :
un émetteur-récepteur (13-10, 13-20) ; et
une commande (13-40) configurée pour :
identifier un échec de connexion avec une cellule,
stocker les informations de mesure de niveau de cellule pour la cellule et les informations de mesure de niveau de faisceau pour les faisceaux associés à la cellule,
transmettre, à une station base, via l'émetteur-récepteur, un premier message relatif à une procédure de rétablissement de commande de ressources radio, RRC, le premier message comprenant un indicateur indiquant que la communication d'informations relatives à l'échec de connexion est disponible,
recevoir, de la station de base, via l'émetteur-récepteur, un second message demandant les informations relatives à l'échec de connexion, et
en réponse au second message, transmettre, à la station base, via l'émetteur-récepteur, un troisième message comprenant les informations de mesure de niveau de cellule stockées et les informations de mesure de niveau de faisceau stockées,
dans lequel, si des valeurs de puissance reçue de signal de référence, RSRP, sont disponibles pour les signaux de référence, la plus élevée des valeurs RSRP est listée en premier dans les informations de mesure de niveau de faisceau.

9. Terminal de la revendication 8, dans lequel :
dans le cas où les valeurs RSRP ne sont pas disponibles et où les valeurs de qualité de signal reçu de référence, RSRQ, sont disponibles pour les signaux de référence, la plus élevée des valeurs RSRQ est listée en premier dans les informations de mesure de niveau de faisceau, et
dans le cas où les valeurs RSRP et les valeurs RSRQ ne sont pas disponibles et que les valeurs de rapport signal/brouillage et bruit, SINR, pour les signaux de référence sont disponibles, la plus élevée des valeurs SINR est listée en premier dans les informations de mesure de niveau de faisceau.

10. Terminal de la revendication 8, dans lequel l'information d'index de chacun des signaux de référence est stockée dans l'information de mesure de niveau de faisceau.

11. Terminal de la revendication 8, dans lequel chacun des signaux de référence est un bloc de signal de synchronisation, SSB, ou un signal de référence d'informations d'état de canal, CSI-RS.

12. Station de base dans un système de communication sans fil, la station de base comprenant :
un émetteur-récepteur (13-10, 13-20) ; et
une commande (14-50) configurée pour :
recevoir, en provenance d'un terminal, via l'émetteur-récepteur, un premier message relatif à une procédure de rétablissement de commande de ressources radio, RRC, le premier message comprenant un indicateur indiquant que la communication d'informations relatives à un échec de connexion est disponible,
transmettre, au terminal, via l'émetteur-récepteur, un second message demandant les informations relatives à l'échec de connexion, et
en réponse au second message, recevoir, en provenance du terminal, via l'émetteur-récepteur, un troisième message comprenant des informations de mesure de niveau de cellule pour une cellule sur laquelle l'échec de connexion est identifié et des informations de mesure de niveau de faisceau pour les faisceaux associés à la cellule,
dans laquelle, si des valeurs de puissance reçue de signal de référence, RSRP, sont disponibles pour les signaux de référence, la plus élevée des valeurs RSRP est listée en premier dans les informations de mesure de niveau de faisceau.

13. Station de base de la revendication 12, dans laquelle :
dans le cas où les valeurs RSRP ne sont pas disponibles et où les valeurs de qualité de signal reçu de référence, RSRQ, sont disponibles pour les signaux de référence, la plus élevée des valeurs RSRQ est listée en premier dans les informations de mesure de niveau de faisceau, et
dans le cas où les valeurs RSRP et les valeurs RSRQ ne sont pas disponibles et que les valeurs de rapport signal/brouillage et bruit, SINR, pour les signaux de référence sont disponibles, la plus élevée des valeurs SINR est listée en premier dans les informations de mesure de niveau de faisceau.

14. Station de base de la revendication 12, dans laquelle l'information d'index de chacun des signaux de référence est incluse dans l'information de mesure de niveau de faisceau.

15. Station de base de la revendication 12, dans laquelle chacun des signaux de référence est un bloc de signal de synchronisation, SSB, ou un signal de référence d'informations d'état de canal, CSI-RS.
